# EUROPEAN PATENT APPLICATION

(11) **EP 3 333 793 A1**
(43) Date of publication of application: **13.06.2018**
(21) Application number: 16833379.7
(22) Date of filing: 05.08.2016
(51) Int. Cl.: G06Q 30/02, G06Q 50/00, G06Q 50/30, G06F 17/30

(54) **BUSINESS DISTRICT INFORMATION PROVISION SYSTEM, BUSINESS DISTRICT INFORMATION PROVISION SERVER, BUSINESS DISTRICT INFORMATION PROVISION METHOD, SERVICE APPLICATION SERVER, AND SERVICE APPLICATION SERVER OPERATION METHOD**

(30) Priority: 06.08.2015 KR 20150110899; 17.09.2015 KR 20150131816; 02.10.2015 KR 20150138980; 02.10.2015 KR 20150138981; 20.11.2015 KR 20150163079; 05.01.2016 KR 20160000898; 27.07.2016 KR 20160095214
(71) Applicant: Park, Jaewon, Hwaseong-si, Gyeonggi-do 18431 (KR)
(72) Inventor: Park, Jaewon, Hwaseong-si, Gyeonggi-do 18431 (KR)
(74) Representative: Gulde & Partner
(86) International application number: PCT/KR2016/008646
(87) International publication number: WO 2017/023143

(57) **Abstract**

Provided herein is a business district information provision system, including: a service application server providing a service application; a consumer terminal transmitting a consumer intention created by a consumer using the service application; and a business district information provision server by generating business district information big data by extracting at least one of consumer information, a business type, a business name, an application area, and a consumer's desired opinion on the basis of the consumer intention, and generating customized business district information corresponding to a request of a founder or a business operator on the basis of the business district information big data.

## Description

### TECHNICAL FIELD

The present invention relates to a business district information provision system, a business district information provision server, a business district information provision method, a service application server, and a service application server operation method. More particularly, the present invention relates to a business district information provision system, a business district information provision server, and a business district information provision method, each which provides optimally located business district information designed by combining consumer intention related to business district information collected during the use of application services with existing business district information, and to a service application server and a service application server operation method.

### BACKGROUND ART

With the popularization of mobile devices, as the use of web information becomes increasingly common, many people freely express their opinions through online media such as bulletin boards, blogs, community cafes, and social network services of specific websites. Users sometimes make decisions based on online opinions of other users when evaluating the value of specific information.

For example, consumers express various opinions ranging from product reviews to restaurant reviews through internet or mobile applications. Such opinions can be used as data for other consumers to purchase the corresponding product or refer to these opinions before visiting a restaurant, and, from the viewpoint of service provides, can be made into big data and then used even when they want to indirectly know the intention of consumers.

The biggest handicap in business founding is lack of experience and lack of ability to analyze market trend. There is a problem that if a person who has only worked in a job or academic life starts a new business, he will not be able to adapt easily. Thus, in order to analyze the business district within a specific area in the procedure of preparing business founding, a founder may use the business district information provided by Small Enterprise and Market Service (SEMAS) or may be subjected to a consulting for providing information helpful for business founding.

However, the current business district information system provides business district information on the basis of statistical data that cannot capture the actual demand of consumers, such as geographical information about population distribution, public institutions, and industrial facilities of a specific area, information about amount of credit card used in existing business, and simple mobile information collected by mobile appliances. Thus, after a business starts depending on a consulting service designed on the basis of such information, in reality, there are many cases of closing business with huge losses due to the gap with market demand.

Therefore, if a founder founds a business on the basis of business district information reflecting the intention of actual consumers, the consumers can increase life convenience by using the corresponding business, and the founder of the business can secure the actual consumers as consumers while reducing the public relation cost or marketing cost of the business.

### DISCLOSURE

### TECHNICAL PROBLEM

The business district information provision system, business district information provision server, business district information provision method, service application server and service application server operation method according to the present invention, which have been made to solve the above-described problems, intend to grasp a real market demand by generating business district information big data in which a consumer intention related to business district information is combined with existing business district information.

Further, it is intended to improve the business success rate of a founder by providing optimally located business district information designed on the basis of business district information big data reflecting a consumer intention related to business district information to the founder.

Further, it is intended to establish a foundation capable of providing an O2O (online to offline) service between a consumer and a founder by constructing a system connecting a founder with a consumer expressing a demand intention in real time.

Further, it is intended to stabilize the business founding of a founder early by providing a method of easily promoting a business to a customer or easily providing a service to a customer and to improve the convenience of a customer by allowing the customer to conveniently use the desired business.

Further, it is intended to reduce the time and labor cost necessary for business operation by utilizing a POS function capable of integrally performing purchase/sales, inventory management, and the like and a function such as payment, order reception, reservation proceeding, or waiting time setting, for a system provided to a founder.

Additional advantages, subjects, and features of the invention will be set forth in part in the description which follows and in part will become apparent to those having ordinary skill in the art upon examination of the following or may be learned from practice of the invention.

### TECHNICAL SOLUTION

In order to accomplish the above subjects, in an aspect, a business district information provision system includes: a service application server providing a service application; a consumer terminal transmitting a consumer intention created by a consumer using the service application; and a business district information provision server by generating business district information big data by extracting at least one of consumer information, a business type, a business name, an application area, and a consumer's desired opinion on the basis of the consumer intention, and generating customized business district information corresponding to a request of a founder or a business operator on the basis of the business district information big data.

In order to accomplish the above subjects, in another aspect, a business district information provision method of a business district information provision server, interlocking with a consumer terminal and a service application server, include: receiving a consumer intention from the consumer terminal; analyzing information including an age, sex, contact, application area, business type, business name, and item of a consumer from the consumer intention; reflecting the analyzed information in previously stored business district information big data to update the big data; and generating a customized business district information with respect to a business type, business or desired area requested by a founder on the basis of the updated business district information big data.

In order to accomplish the above subjects, in still another aspect, a method of providing business district information using a consumer terminal connected to a service application server and a business district information provision server, includes: connecting the consumer terminal to a service application provided by the service application server to request an order for a desired business and a desired item; receiving a message asking a consumer intention from the service application server when the desired business and the desired item do not exist in the service application; and transmitting the consumer intention including a desired business name, a desired business type, an application area, a consumer's desired opinion, or an intention to agree the utilization of customer information to the business district information provision server by replying to the message.

In order to accomplish the above subjects, in still another aspect, a service application server includes: a user information database storing individual consumer information using a service application program from a consumer terminal; an order information database storing an order request received from the consumer terminal; a payment information database calculating a billing cost corresponding to the order request and transmitting the billing cost to a payment server; and a business information database transmitting an order history according to the order request in response to the payment result received from the payment server to a business terminal, monitoring a real-time tracking status, waiting time or a reservation status received from the business terminal, and transmitting the real-time tracking status, the waiting time or the reservation status to the consumer terminal.

In order to accomplish the above subjects, in still another aspect, a method of operating a service application server includes: receiving an order request from a consumer terminal; calculating a billing cost corresponding to an order history of the order request and transmitting the billing cost to a payment server when a business item depending on the order request exists; requesting a consumer intention conjunction with a business district information provision server when a business item depending on the order request does not exist; transmitting the order history to a business terminal depending on the payment result received from the payment server; and monitoring a real-time tracking status, waiting time or a reservation status received from the business terminal, and transmitting the real-time tracking status, the waiting time or the reservation status to the consumer terminal.

### ADVANTAGEOUS EFFECTS

According to the business district information provision system, business district information provision server, business district information provision method, service application server and service application server operation method according to embodiments of the present invention, realistic market demand can be grasped by generating business district information big data reflecting the actual consumer intention for a target business type or a target business as well as statistical values for usage pattern information and entering information of consumers and registered business information.

Further, according to the business district information provision system, business district information provision server, business district information provision method, service application server and service application server operation method according to embodiments of the present invention, a founder can receive a consulting service based on business district information big data provided by the business district information provision system of the present invention, thereby previously grasping the actual demand of the desired business type or desired business (brand), so as to increase the success rate of business founding.

Further, according to the business district information provision system, business district information provision server, business district information provision method, service application server and service application server operation method according to embodiments of the present invention, a consumer can participate in the consumer intention discussion more actively and disclose his intention in order to receive a compensation service, and a founder can enjoy a marketing effect for making it easier for the founder to open a business later by utilizing the compensation service.

Further, the success rate of the business founding of a founder can be improved by providing optimally located business district information designed based on business district information big data reflecting the business district information-related intention of an actual consumer to the founder.

Further, according to the business district information provision system, business district information provision server, business district information provision method, service application server and service application server operation method according to embodiments of the present invention, a consumer can perform purchase/sales and inventory management collectively through a service application server, and can analyze a consumer's order history and a consumer's consumption tendency from the service application server by linking with the information input from a business terminal, thereby more efficiently operating a business.

Further, according to the business district information provision system, business district information provision server, business district information provision method, service application server and service application server operation method according to embodiments of the present invention, a consumer can grasp the status of business in real time, make an order, and make a reservation in using a business that was founded by his own request, thus enabling the business to be used more conveniently.

### DESCRIPTION OF DRAWINGS

FIG. 1 is a block diagram showing a business district information provision system according to an embodiment of the present invention.
FIG. 2 is a flowchart showing an example of a business district provision method of the business district information provision system shown in FIG. 1.
FIG. 3 is a diagram showing an example of a method of collecting consumer intentions created by consumer terminals.
FIG. 4 is a diagram showing another example of a method of collecting consumer intentions created by consumer terminals.
FIG. 5 is a diagram for explaining a URL address generation window for collecting other consumer intentions created by consumer terminals.
FIG. 6 is a diagram showing a list of consumer intention collection history received from a plurality of consumer terminals.
FIG. 7 is a diagram showing an example of a list of recommended information business history shown on the consumer terminal according to the application for business opening promotion of a business operator.
FIG. 8 is a diagram showing another example of a list of recommended information business history shown on the consumer terminal according to the application for business opening promotion of a business operator.
FIG. 9 is a diagram showing still another example of a method of collecting consumer intentions.
FIGS. 10 and 11 are diagrams showing still another example of a method of collecting consumer intentions.
FIG. 12 is a diagram showing still another example of a method of collecting consumer intentions.
FIGS. 13 and 14 illustrate a flowchart showing another example of a business district provision method of the business district information provision system shown in FIG. 1.
FIG. 15 is an example of a business-related information input window input by a consumer according to the embodiment of FIG. 13.
FIG. 16 is a flowchart showing still another example of a business district provision method of the business district information provision system shown in FIG. 1.
FIG. 17 is an example of an item-related information input window input by a consumer according to the embodiment of FIG. 16.
FIG. 18 is a block diagram specifically illustrating an example of the service application server and business district information provision server shown in FIG. 1.
FIG. 19 is a block diagram specifically illustrating another example of the service application server and business district information provision server shown in FIG. 1.
FIG. 20 is a diagram specifically illustrating the business information database shown in Fig. 18.
FIG. 21 is a flowchart illustrating a method of setting an optimal business founding area of the business district information provision server shown in FIG. 1.
FIG. 22 is a map for explaining the optimal business founding area shown in FIG. 21.
FIG. 23 is a flowchart showing a method of providing a sales management of the service application server shown in FIG. 1.
FIG. 24 is a diagram illustrating an example of a business list within the corresponding area displayed on a consumer terminal for receiving an order request of a consumer.
FIG. 25 is a reservation content confirmation screen displayed on a consumer terminal according to the order request of a consumer.
FIG. 26 is an example of a visiting reservation confirmation screen displayed on a consumer terminal according to the order request of a consumer.
FIG. 27 is another example of a visiting reservation confirmation screen displayed on a consumer terminal according to the order request of a consumer.
FIG. 28 is an example of a visiting reservation confirmation screen displayed on a business terminal according to the order request of a consumer.
FIG. 29 is another example of a visiting reservation confirmation screen displayed on a business terminal according to the order request of a consumer.
FIG. 30 is still another example of a visiting reservation confirmation screen displayed on a business terminal according to the order request of a consumer.
FIG. 31 is an example of a service improvement request screen for the business shown in FIG. 25.
FIG. 32 is a block diagram showing a business district information provision system according to another embodiment of the present invention.
FIG. 33 is a block diagram more specifically showing the business district information provision system of FIG. 32.
FIG. 34 is a flowchart showing an example of a business district provision method of the business district information provision system shown in FIG. 32.
FIG. 35 is a block diagram showing a business district information provision system according to still another embodiment of the present invention.

### MODE FOR CARRYING OUT INVENTION

Specific structural and functional descriptions of embodiments of the present invention disclosed herein are only for illustrative purposes of the embodiments of the present invention. The present invention may be embodied in many different forms without departing from the spirit and significant characteristics of the present invention. Therefore, the embodiments of the present invention are disclosed only for illustrative purposes and should not be construed as limiting the present invention.

Reference will now be made in detail to various embodiments of the present invention, specific examples of which are illustrated in the accompanying drawings and described below, since the embodiments of the present invention can be variously modified in many different forms. While the present invention will be described in conjunction with exemplary embodiments thereof, it is to be understood that the present description is not intended to limit the present invention to those exemplary embodiments. On the contrary, the present invention is intended to cover not only the exemplary embodiments, but also various alternatives, modifications, equivalents and other embodiments that may be included within the spirit and scope of the present invention as defined by the appended claims.

It will be understood that, although the terms first, second, etc. may be used herein to describe various elements, these elements should not be limited by these terms. These terms are only used to distinguish one element from another element. Thus, for example, a first element, a first component or a first section discussed below could be termed a second element, a second component or a second section without departing from the teachings of the present invention.

The term "connected to" or "coupled to" that is used to designate a connection or coupling of one element to another element includes both a case that an element is "directly connected or coupled to" another element and a case that an element is connected or coupled to another element via still another element. In this case, the term "directly connected to" or "directly coupled to" means that an element is connected or coupled to another element without intervention of any other element.

Throughout the specification, the terms "portion", "unit", "module", and the like mean a unit for processing at least one function or operation, which can be implemented by hardware, software, or a combination of hardware and software.

The use of the terms "a" and "an" and "the" and similar referents in the context of describing the invention (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. It will be understood that, although the terms first, second, etc. may be used herein to describe various elements, these elements should not be limited by these terms. These terms are only used to distinguish one element from another element. Thus, for example, a first element, a first component or a first section discussed below could be termed a second element, a second component or a second section without departing from the teachings of the present invention.

Unless defined otherwise, all technical and scientific terms used herein have the same meaning as commonly understood by one of ordinary skill in the art to which this invention belongs. It is noted that the use of any and all examples, or exemplary terms provided herein is intended merely to better illuminate the invention and is not a limitation on the scope of the invention unless otherwise specified. Further, unless defined otherwise, all terms defined in generally used dictionaries may not be overly interpreted.

Hereinafter, preferred embodiments of the present invention will be described with reference to the attached drawings.

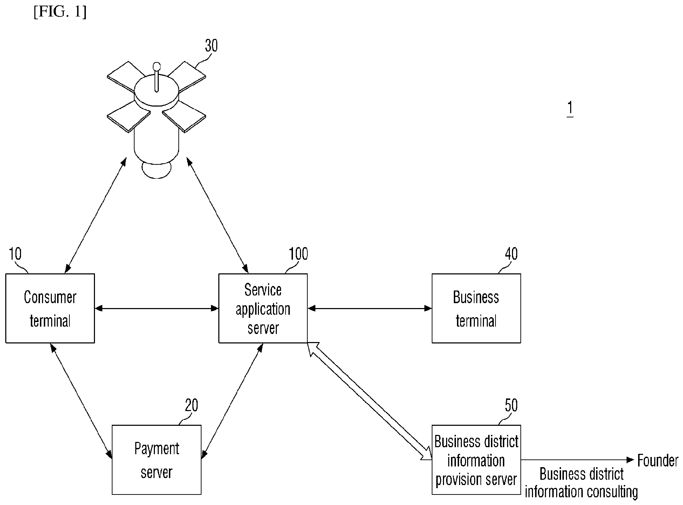

FIG. 1 is a block diagram showing a business district information provision system according to an embodiment of the present invention.

Referring to FIG. 1, a business district information provision system 1 includes a consumer terminal 10, a service application server 100, a GPS satellite 30, a business terminal, and a business district information provision server 50.

The business district information provision system 1 is an integrated information provision system that provides O2O (Online to Offline) service between a consumer and an existing business operator and between a founder and an existing business operator by establishing a system that connects a founder/business operator with a consumer expressing consumption intention in real time. According to an embodiment, the business district information provision system 1 may be referred to as an 'our neighborhood trade merchandising system' or a 'self-employed merchant recovery system', but the name of the system may be changed according to various embodiments.

The consumer terminal 10 is an electronic appliance capable of detecting the location information of a consumer such as a smart phone, a tablet PC, a notebook PC, and a PC, and examples thereof may include a GPS (Global Positioning System) terminal, a 2G/3G/4G terminal, a Wibro (Wireless Broadband internet) terminal, and a Wi-Fi terminal.

The consumer terminal 10 is interlocked with the GPS satellite 30 or the network IP to track position information.

The service application server 100 provides a service application program to the consumer terminal 10. The service application program is a program that connects a founder/business operator with a consumer who expresses a demand intention to the founder in real time, and serves a path for providing O2O (Online to Offline) service between a consumer and an existing business operator and between a founder and an existing business operator.

In an embodiment, the consumer terminal 10 selects a business and an item through the service application program and transmits an order request to the service application server 100. Further, the consumer terminal 10 can transmit the consumer intention through the service application program when a desired business or item is not found in the pre-registered business/item.

When the service application server 100 receives the order request from the consumer terminal 10, the service application server 100 requests a pre-registered business to produce a target item according to the order request.

The business district information provision system 1 may further include a payment server (not shown). The payment server sends a payment request to the consumer terminal 10 in accordance with a billing cost received from the service application server 100 and receives payment according to the payment means in the consumer terminal 10. The payment server transmits the payment result to the service application server 100 when the payment at a receiver terminal is completed.

The payment server 20 sends a payment request to the consumer terminal 10 according to the billing cost received from the service application server 100 and receives payment according to the payment means in the consumer terminal 10. The payment server 20 transmits the payment result to the service application server 100 when the payment at the receiver terminal is completed. The payment server 20 may be a communication company server provided separately according to an embodiment of the present invention and capable of performing financial operations, a financial server capable of online payment, or the like. The payment server 20 may be included in the business terminal 40 or the service application server 100 as a module capable of performing financial operations according to another embodiment.

When the service application server 100 receives the payment result in response to an order request from the payment server 20, the service application server 100 transmits a production request of a target item for a pre-registered business to the business terminal 40. The business having received the production request produces the target item and delivers the produced target item to the consumer who placed an order request.

When the order request received from the consumer terminal 10 is not included in the business or target item list pre-registered in the service application server 100, the service application server 100 notifies the business district information provision server 50 of this fact.

Also, the service application server 100 can receive business status information from the business terminal 40, and monitor real-time tracking status such as order delivery, waiting time, reservation status, and the like. The consumer terminal 10 can display a business list reflecting the monitoring situation at the time of business search.

When the business district information provision server 50 sends a message asking the consumer terminal 10 to inquire whether or not to apply for a consumer intention request and receives a consumer intention history according to the request from the consumer terminal 10, the business district information provision server 50 extracts at least one of consumer information, business type, business name, application area, and a consumer's desire opinion to generate business district information big data. Further, the business district information provision server 50 generates customized business district information for a business founding consulting using the business district information big data in order to respond to the consulting request of a founder. According to an embodiment, the customized business district information may be an optimal business area, an item, and the like for a founder who is to found a new business. According to another embodiment, for existing business operators, the customized business district information may be service improvement, additional or modified items, and the like according to the consumer intention.

More specifically, when there is no business or item desired by a consumer among the businesses or items registered in the service application server 100, the business district information provision server 50 may transmit a message for asking whether or not to apply the consumer intention to the consumer terminal 10. When the business district information provision server 50 receives the history of the consumer intention according to the application, the business district information provision server 50 extracts at least one of consumer information, business type, business name, application area, a consumer's desired opinion to generate business district information big data.

Further, the business district information provision server 50 generates business district information for business founding consulting using the business district information big data in order to respond to a consulting request of a founder.

In this case, the consumer intention may be an intention directly created by a consumer, may be an intention that agrees the intention of another consumer, and may be an intention that agrees any one of business recommendation lists.

Further, the consumer intention may be selected among one or more similar menus or similar business type recommended for a consumer in the business district information provision server 50 on the basis of a keyword searched by the consumer.

In the present specification, the term "consumer intention" may be referred to as a business district inconvenience report, a business opening request, a business type opening request, or a consumer's desired opinion, but is not limited thereto as long as it can be expressed or reflected in the business district information system, and may be various expressed.

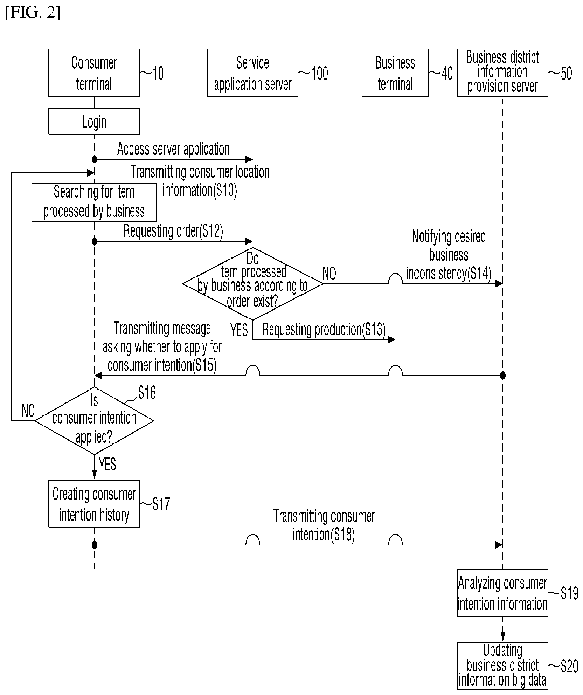

FIG. 2 is a flowchart showing a business district provision method of the business district information provision system shown in FIG. 1.

Referring to FIG. 2, the consumer terminal 10 accesses the service application server 100 through the login in the service application program (S10). The service application server 100 may receive the location information of the consumer terminal 10 from login information (S10). The service application server 100 may receive the position information of the consumer terminal 10 from the login information (S10).

The consumer may search a business and an item at the consumer terminal 10 (S11). At this time, it is assumed that a service application program for interlocking with the service application server 100 is installed in the consumer terminal 10. When the consumer selects an desired business name, business type, or item to be processed and requests an order through the consumer terminal 10 (S12), the service application server 100 searches for desired business name, business type, and item to be processed according to the order in the pre-registered business information in the desired area, and transmits a production request to the corresponding business terminal 40 when there is no matched business (S13). However, when the desired business name or business type and the item to be processed do not exist in the pre-registered business information, or when there is no pre-registered business in the desired area, the service application server 100 transmits a desired business inconsistency notification to the business district information provision server 50 (S14).

The business district information provision server 50 transmits a message for asking whether or not to apply the consumer intention to the consumer terminal 10 having transmitted the order request based on the desired business inconsistency notification (S15).

When the consumer wants to request the opening of a service for a desired business or a business type and an item to be processed in the desired area, the consumer applies for the consumer intention (S16) and creates a consumer intention history (S17).

However, when the consumer does not want to create the consumer intention history (S16), the consumer is requested to rediscover other desired businesses or business types and items to be processed (S11).

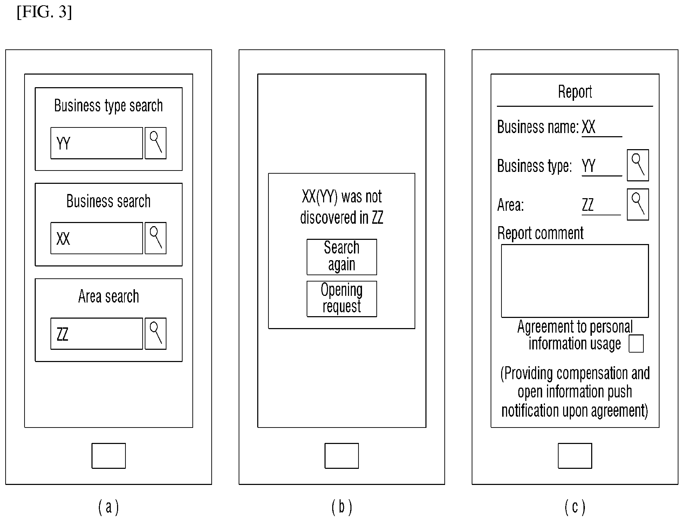

In the present specification, the consumer intention may be an intention directly created by a consumer, may be an intention that agrees with the intention of another consumer, and may be an intention that agrees with any one of business recommendation lists. Further, the consumer intention may be selected among one or more similar menus or similar business type recommended for a consumer in the business district information provision server 50 on the basis of a keyword searched by the consumer. For convenience of explanation, the consumer intention history will be described in detail with reference to FIG. 3.

The business district information provision server 50 receives the consumer intention created from the consumer terminal 10 (S18), analyzes the information, and extracts main keywords for each item. For example, the business district information provision server 50 extracts the consumer information, business type, business name, application area, item, service item, consumer's desired opinion, etc. included in the consumer intention (S19).

The extracted information is reflected in the previously stored business district information big data to update the business district information big data (S20).

The business district information big data is used as a basis for business district information for consulting in response to requests from a founder or an existing business operator. That is, the business district information provision server can provide customized business district information according to a request of a founder or an existing business operator. According to an embodiment, the customized business district information may include an optimal business area, item, etc. according to consumer intention, for a new founder. According to another embodiment, the customized business district information may include service improvement, additional or modified items, etc. according to the consumer intention, for an existing business operator.

FIG. 3 is a block diagram showing an example of a method of collecting consumer intentions created by consumer terminals.

As shown in FIG. 3(a), a consumer may search for a desired business type, a desired business name, and a desired area from a consumer terminal, and then select at least one of item lists to be displayed subsequently to request an order.

However, when a desired business is not pre-registered in the service application server, when a desired business type or a desired business name is not searched in the desired area, or when a desired item is not searched in the desired business, as shown in FIG. 3(b), a window of notifying the result of search failure may appear.

When the consumer applies for a business opening request (or consumer intention) hoping that a desired business is opened in the desired area, a desired item is added in the desired business or a service is improved, as shown in FIG. 3(c), a consumer intention creating window appears on the consumer terminal. When the consumer creates at least one of a desired business name, a desired business type, an application area, and report opinion (desired opinion) on consumer intention creating window and then agrees the use of personal information and completes an application, the corresponding consumer intention is transmitted to the business district information provision server and is used as a basis of the business district information big data. The report opinion may further include additional items requested to be opened, services to be improved, and the like.

In this case, the personal information requiring usage agreement may be information about an age, sex, report location of a consumer, log information about the usage of the service application, social network information, or the like. The usage agreement includes an agreement to use as a basis for business district information big data, an agreement to information utilization for getting a compensation service when a business is opened by consumer intention, or an agreement to information utilization for marketing information to a founder of a business to be opened.

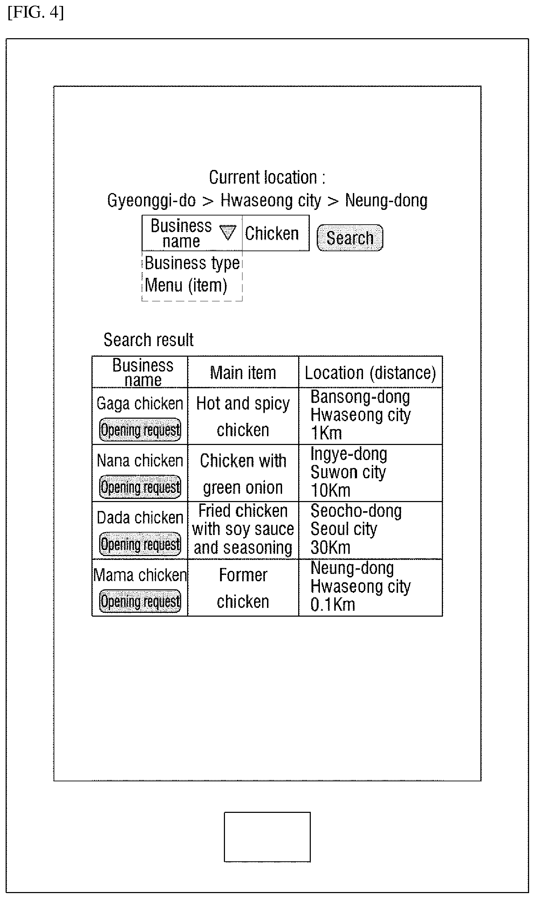

FIG. 4 is a block diagram showing another example of a method of collecting consumer intentions created by consumer terminals.

Referring to FIG. 4, a consumer may search for a desired business type, a desired business name, or a desired menu (or item) from a consumer terminal. At this time, the service application server may provide any one of a pre-registered business type list, business list, or menu (item) list to the consumer terminal.

As shown in the drawings, the business district information provision server displays the search result based on the search keyword requested from the consumer terminal that has agreed the consumer intention application. Specifically, the business district information provision server provides a business list related to the corresponding business type if search is conducted by a business type, and provides a business list the same as or similar to the corresponding business name if search is conducted by a business name. Further the business district information provision server may provide a business list related to the corresponding menu if search is conducted by a menu.

The business district information provision server may provide business district information such as a business name, main items of the business, a GPS location of the consumer terminal or a distance at a set location as a search result on the keyword in conjunction with the service application server. Although not shown in the drawings, in the list, location information such as a contact or a map may be provided for each business together with business district information such as customer evaluations as the search result.

For example, when a user inputs the keyword "chicken" as a menu (item), the business district information provision server may display a list of businesses using chicken, located within a predetermined radius from "Neung-dong, Hwaseong city, Gyeonggi-do" which is a GPS location or set location of the consumer terminal. In this case, the consumer may search for the list through a service application program installed in the consumer terminal while changing the area to be searched, the setting of the radius, or the like.

When the consumer selects any one of a business type list, a business list, and a menu (item) list, which are displayed on the consumer terminal, and presses a "business opening request" button, the business district information provision server 50 regards the business opening request as a consumer intention, and utilizes this business opening request as a basis of business district information big data. In an embodiment, the business opening request selected by the consumer may be an opening request for a business far away from current location or set location.

This embodiment is different from the embodiment of FIG. 3 in that the consumer indicates an intention without creating at least one of a desired business name, a desired business type, an application area, and an report opinion (desired opinion).

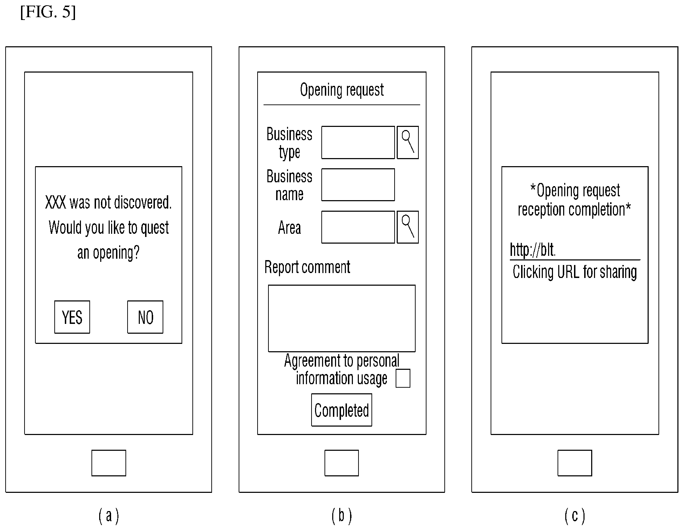

FIG. 5 is a block diagram for explaining a URL address generation window for collecting other consumer intentions created by consumer terminals. For convenience of explanation, differences from FIG. 3 will be mainly described.

Referring to FIGS. 5(a) and 5(b), as described in Figs. 3 (a) and 3 (b), when a window notifying the result of search failure appears, the consumer want a desired business to be opened in a desired area, and may thus apply for his attention.

When the consumer creates the contents of the consumer intention and presses a completion button, the business district information provision server 50 may generate a URL address for the received consumer intention. When the business district information provision server 50 transmits a notification message including the generated URL address to the consumer terminal, the consumer can share the corresponding URL address with an internet cafe, blog or social network service where friends or acquaintances are joined.

In an embodiment, when at least one of the friends or acquaintances of the consumer clicks the URL address shared through SMS, an email, an internet café, a blog or the like, the business district information provision server 50 may display a window for inputting basic information (name, sex, age, contact, address, etc.) to the terminal of the person having clicked the URL address, so as to express the same consumer intention.

In another embodiment, when at least one of the friends or acquaintances of the consumer clicks the URL address shared through a social network service or clicks the preference menu associated with the URL address, the business district information provision server 50 may receive the same consumer intention in junction with the social network login information of the person having clicked the preference menu.

As a result, when the common consumer intention matched with a business name, a business type, an item, and an application area is received more than a predetermined threshold number of times, the business district information provision server 50 may form big data weighted in junction with the business and item in the application area, may generate a customized business district information based on the weighted business district information big data, and may provide this customized business district information to a founder.

Meanwhile, when the consumer intentions of other consumers who are common with the created consumer intention are accumulated to become more than the predetermined threshold number and then a related business is opened later, the consumer may receive a compensation service such as gift payment form the opened business. In this case, the compensation service may be a gift, a gift certificate, or a credit point provided to the consumers who requested the opening of a business in order to encourage the use of the business in the future, when a founder opens the business based on the customized business district information received through the business district information provision server 50.

The founder may receive basic information (name, sex, contact, address, etc.) of the consumers who requested the opening of the business from the business district information provision server 50, and may utilize the basic information as data for promoting the opened business.

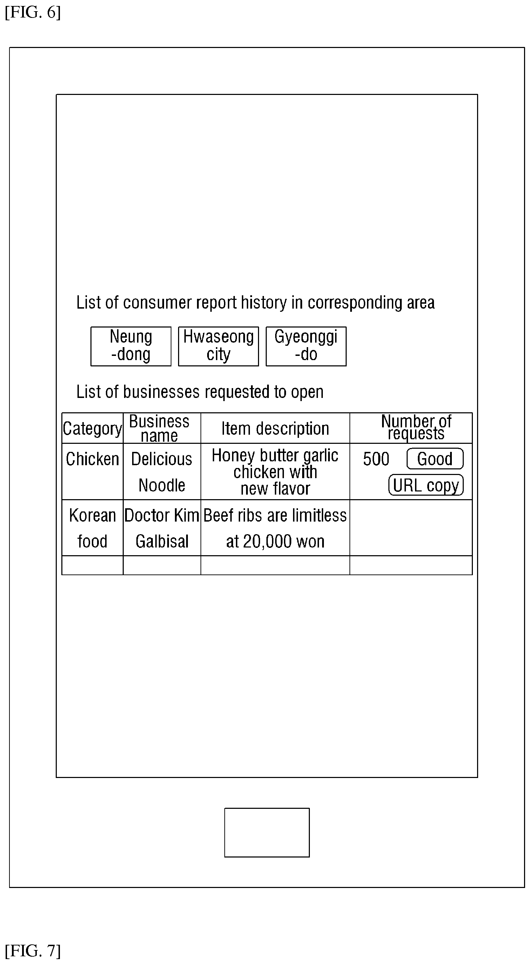

FIG. 6 is a block diagram showing a list of consumer intention collection history received from a plurality of consumer terminals.

Referring to FIG. 6, the consumer may check a list of at least one consumer intention in the preset menu. For example, the consumer intention list may be shown in the order of the total number of requests to which consumer intentions of other consumers are added for each local area (for example, business opening request belonging to Neung-dong, Hwaseong city, Gyeonggi-do). As another example, the consumer intention list may be shown in the order of the total number of requests in a national area while ignoring the local area.

When the consumer selects any one consumer intention from the consumer intention list displayed on the consumer terminal, the business district information provision server 50 may provide detailed information about the selected consumer intention. In this case, the detail information may include a business name, business characteristics, menu and price of item, exiting user evaluations, opinions of consumers, location information about the same business located at the closest distance from the area set by the consumer intention, and compensation service contents provided to the consumers having expressed the consumer intention at the time of opening the business according to the consumer intention.

The consumer may create the consumer intention by itself according to an embodiment as shown in Figs. 3 to 5, but may check the consumer intention list already created by other consumers and indicate his intention to agreement to the consumer intention in consistency with the consumer's own intention. As a result, as the number of requests increases, the weighted value for the consumer intention may be reflected to a high degree when creating business founding data based on the business district information big data.

As for the consumer intentions of other consumers, as shown in FIG. 6, the consumer may indicate an agreement by clicking the "good", and may further increase the number of requests by clicking the "URL address copy" and sharing the clicked result through his own SMS, email, internet café, or blog.

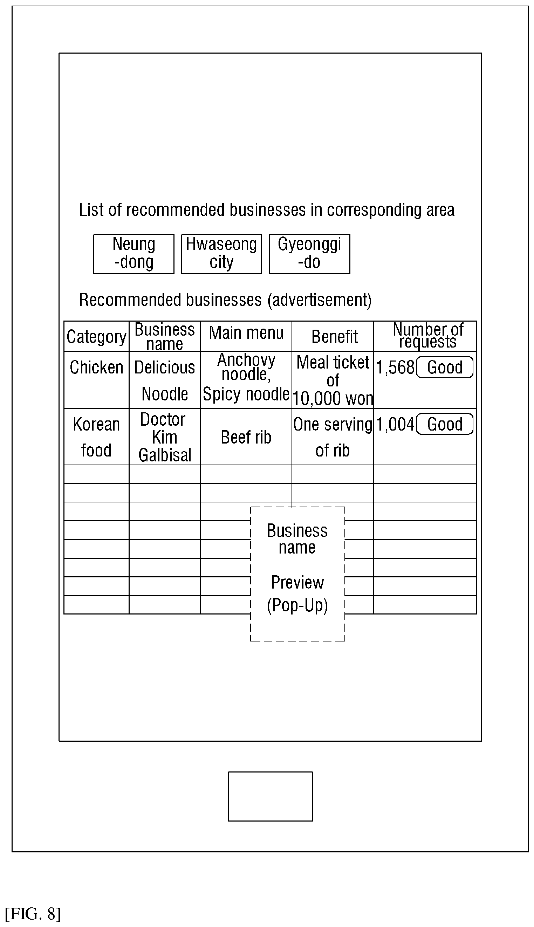

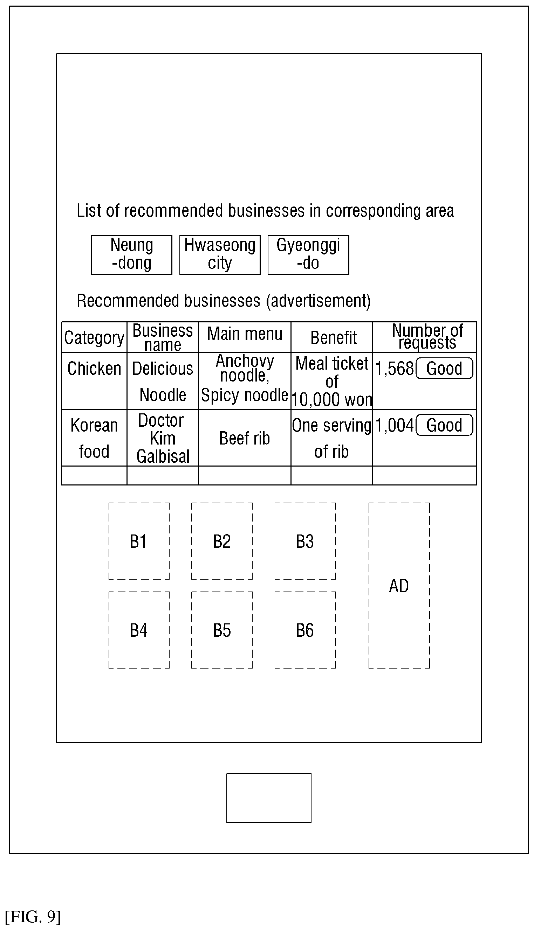

FIG. 7 is a diagram showing an example of a list of recommended information business history shown on the consumer terminal according to the application for business opening promotion of a business operator, and FIG. 8 is a diagram showing another example of a list of recommended information business history shown on the consumer terminal according to the application for business opening promotion of a business operator.

The business district information provision server 50 may generate and update the business district information big data by counting the number of consumer responses to the business introduction information created by the business operator as well as the consumer intention created directly by the consumer.

For example, a franchise headquarter may provide detailed information of businesses to the business district information provision server in the form of a pop-up window (Preview). In this case, the detailed information of the businesses may include a business name, business characteristics, menu and price of item, existing user evaluations, opinions of consumers, location information about the same business located at the closest distance from the area set by the consumer intention, and a compensation service contents provided to the consumers having expressed the consumer intention at the time of opening the business according to the consumer intention.

In an embodiment, as shown in FIG. 7, the consumer may see a list of recommended businesses for franchise not existing in the area according to the access location or search area of the consumer terminal. At this time, when the consumer clicks any one recommended business of the list of recommended businesses belonging to "Neung-dong, Hwaseong city, Gyeonggi-do", the consumer can preview the brief information about the corresponding business (for example, a promotional page) through a pop-up window. Then, when the consumer clicks the corresponding recommended business again, the consumer can check the detailed information about this business. In another embodiment, when the consumer selects any one recommended business, the consumer can check the detailed information about the corresponding business immediately.

The consumer may search for the list of recommended businesses, and indicate an agreement to the advertisement of the recommended businesses matching his own intention. As a result, as the number of requests increases, then number of agreements to the recommended businesses (the number of clicks of "good" in FIG. 6) is also counted together with the number of consumer intention requests at the time of generating business founding data on the basis of the business district information big data, and thus the weighted value thereof may be reflected to a high degree.

In another embodiment, as shown in FIG. 8, when the consumer terminal searches for an area having no chain store of the franchise, or when the access location of the consumer terminal according to GPS or IP tracking is located in an area having no chain store of the franchise, the consumer may be exposed to the advertisement including the contents of the business information and compensation service provided to the franchise headquarter. In this case, the advertisement may be provided in the form of a promotion banner B for each business at the bottom of the recommended business list, the promotion banners B1 to B6 may be sequentially arranged according to the access location of the consumer terminal, the distance from search area, the number of consumer agreements, the service use rank of businesses, or the like.

Meanwhile, the advertisement banner AD of the franchise itself may be arranged at one side of the promotion banner space.

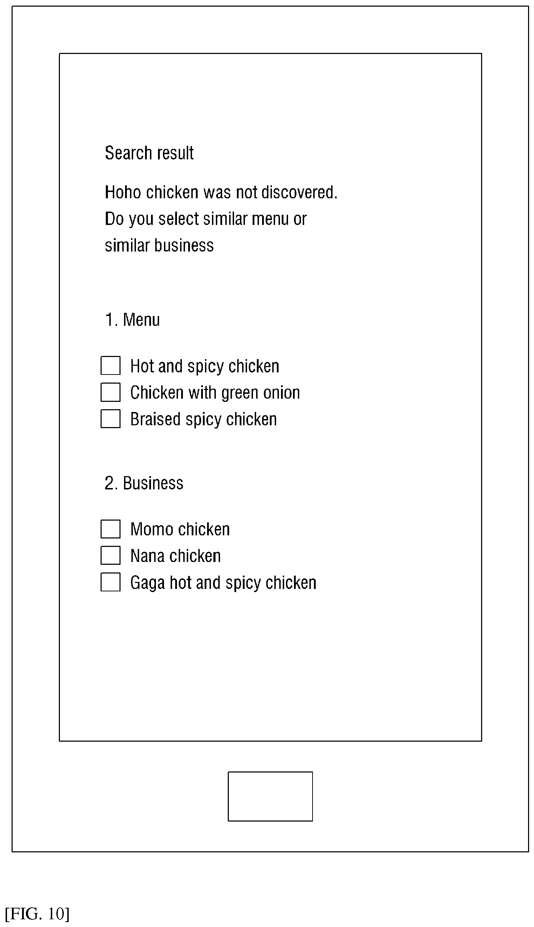

FIG. 9 is a block diagram showing still another example of a method of collecting consumer intentions.

Unlike FIGS. 7 and 8, in the method of collecting consumer intentions, a plurality of similar menus or similar business types, similar to keywords, may be arranged based on the consumer's search keywords, and then any one similar menu or business type may be collected as the consumer intention.

More specifically, as shown in FIG. 9, if the consumer searches for "Hoho chicken" but there is no search result, the business district information provision system may recommend the "hot and spicy chicken, chicken with green onion, and braised spicy chicken", which are supposed to be represented by "Hoho chicken", as similar menus, and may recommend the "Momo chicken, Nana chicken, and Gaga spicy chicken", which are supposed to be similar to the "Hoho chicken" in company name, as similar businesses. In this case, the consumer may select any one of the "hot and spicy chicken, chicken with green onion, and braised spicy chicken" as a similar menu, and may select any one of the "Momo chicken, Nana chicken, and Gaga spicy chicken" as a similar business, so as to transmit the consumer intention to the business district information provision system.

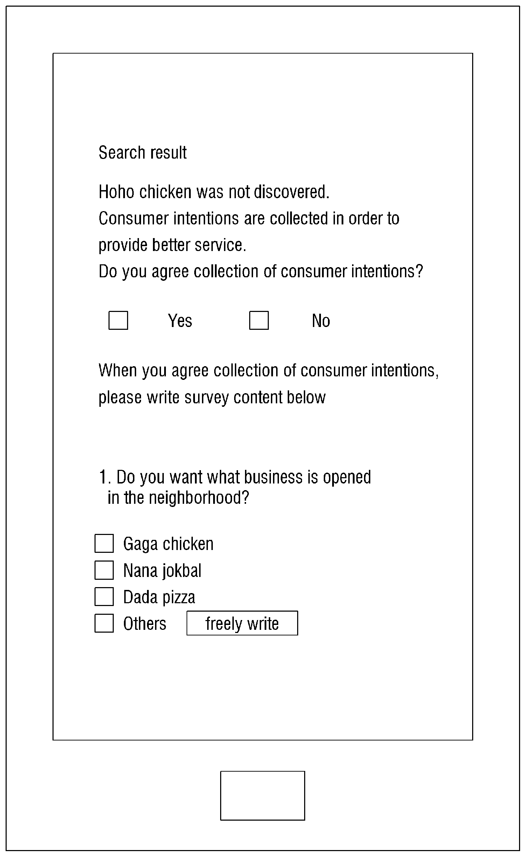

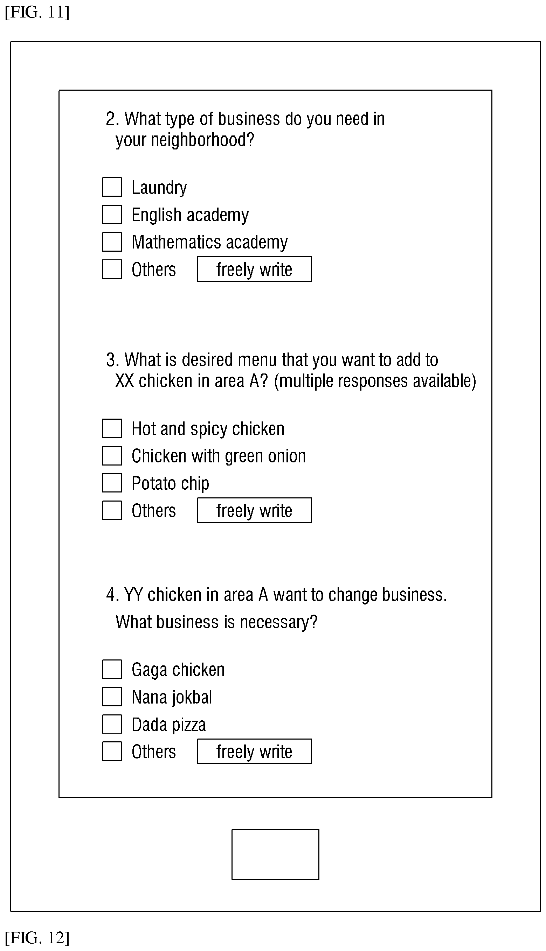

FIGS. 10 and 11 are block diagrams showing still another example of a method of collecting consumer intentions.

Unlike the method of collecting consumer intentions described in FIGS. 3 to 9, the business district information provision system 1 may gather the consumer intention in the form of a survey.

For example, as shown in FIGS. 10 and 11, if the consumer searches for the desired business "Hoho chicken" but there is no pre-registered business, the business district information provision system may display a survey history on the consumer terminal according to the consumer intention collection agreement.

The survey history may include survey contents for examining the highest priority business, the highest priority business type, the highest priority menu (item) based on the GPS location or search setting area of the user terminal. Further, when the business pre-registered in the service application server is changed to another business or another business type, the survey history may include survey contents asking the consumer intention for optimal business or optimal business type. In this case, each of the survey contents may further include consumer's free items ("other" menus shown in FIGS. 10 and 11) in addition to selection items set according to a predetermined criterion in the business district information provision system.

As a result, the business district information provision system may collect consumer intentions more efficiently by providing the user with various options.

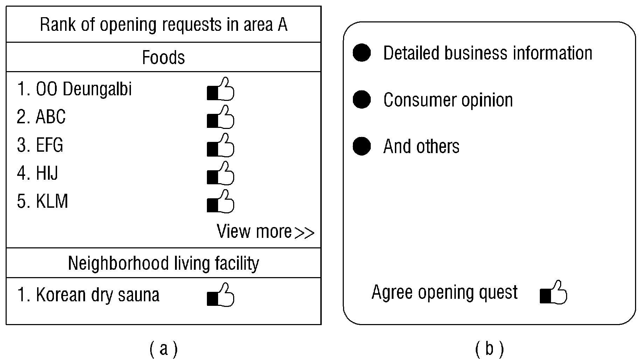

FIG. 12 is a block diagram showing still another example of a method of collecting consumer intentions.

The business district information provision system 1 may collect consumer intentions in the form of a search result. More specifically, when a consumer searches for contents related to a specific business type in a search portal site or a service application, the business district information provision system 1 may extract the consumer intentions of other consumers related to the corresponding business type in conjunction with the portal site application or service application of a user terminal, and may provide a business opening request list as a search result. When there are the corresponding business type to be searched or other interesting business types, the consumer having a user terminal clicks an agreement (or "good") as a consumer intention in the corresponding business opening request list to participate in the indication of the consume intention.

Referring to FIG. 12, when the consumer searches for the "restaurant in area A", the business district information provision system display restaurants located in the area A and a business opening request list related to the restaurants as a search result through a user terminal. In this case, the business opening request list may be a list in which the number of business opening requests, the distance from a search area, and business similarity are sequentially arranged according to the weighted value.

In an embodiment, as shown in FIG. 12(a), in the business opening request of the restaurants in the area A, business opening requests may be provided in the order of OO deunggalbi, ABC, EFG, HIJ, and KLM according to the number of business opening requests of other consumers. When the consumer clicks any one business name of the list, as shown in FIG. 12(b), the consumer may check detailed explanations such as detained business information, opinions of other consumers, and other information. In this case, the detained business information may include basic information of the corresponding business, advantages and characteristics of only the business, menu and price, local franchise reviews, benefits at the time of opening a store, and events. Further, the consumer may check the detailed business information and click an agreement to indicate the consumer intention for business opening.

Even when the consumer searches for convenience facilities such as pharmacies, hospitals or post offices or educational facilities such as academies, the business district information provision system may provide a business list in which convenience facilities and educational facilities are sequentially arranged depending on the distance from a search point and a business opening request list of the corresponding business types together.

When a consumer searches for "flowerpot in area B" to buy an article, the business district information provision system may provide a business list in which shops selling the corresponding article (flowerpot) belonging to the area B are arranged in order of decreasing a distance and a business opening request list of the corresponding business types together.

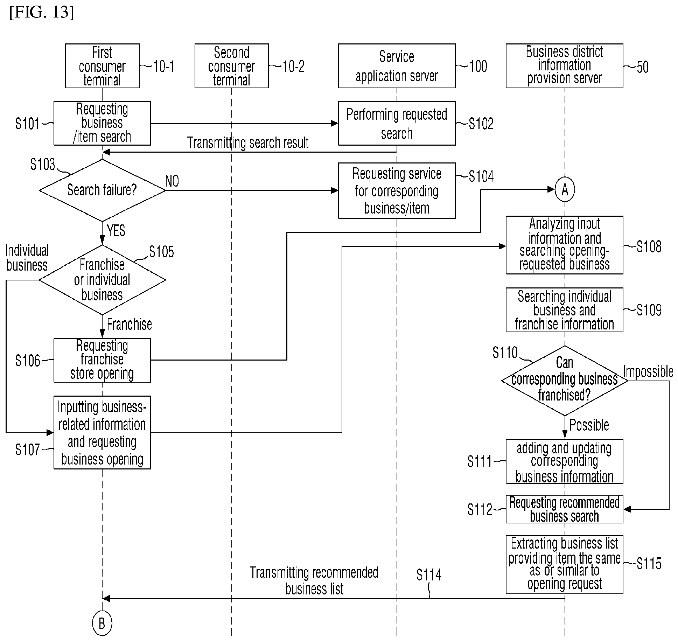

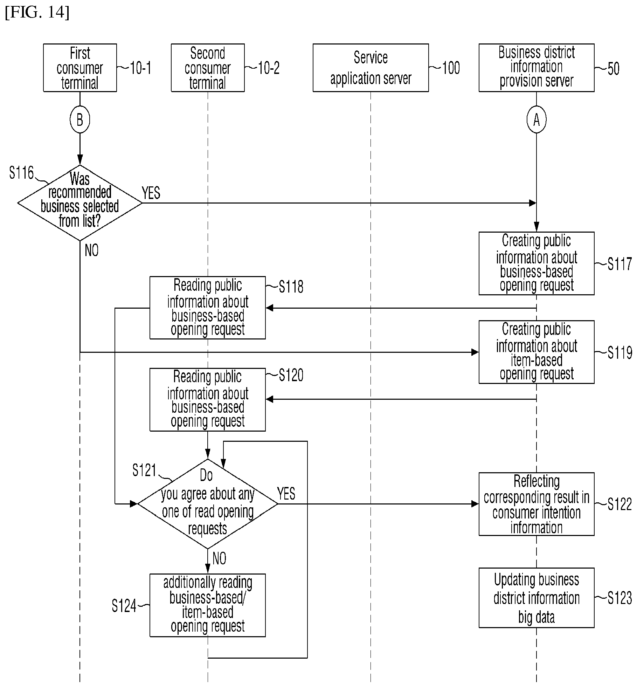

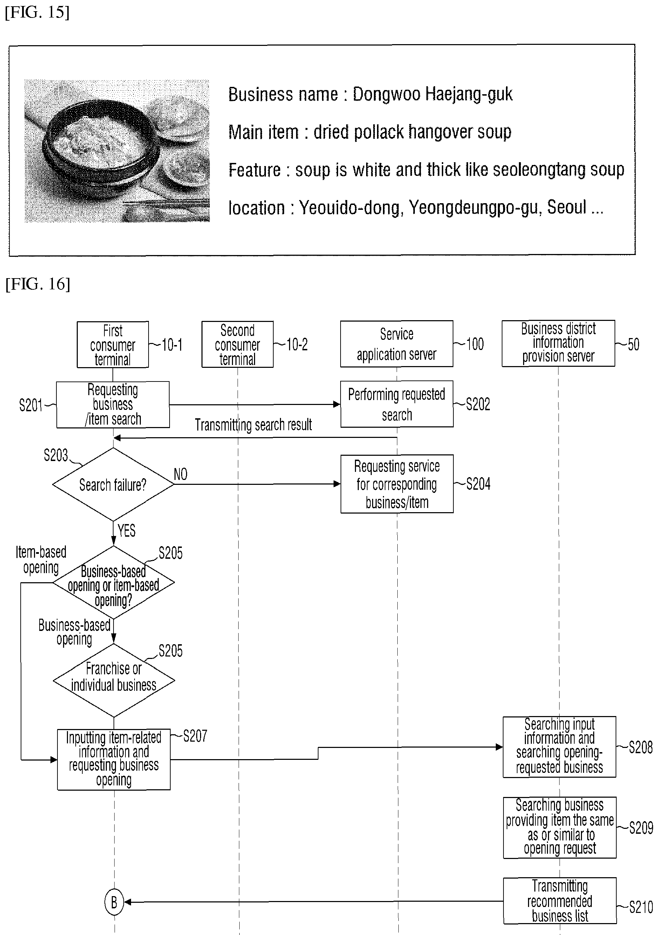

FIGS. 13 and 14 illustrate a flowchart showing another example of a business district provision method of the business district information provision system shown in FIG. 1. FIG. 15 is an example of a business-related information input window input by a consumer according to the embodiment of FIG. 13.

For convenience of explanation, descriptions of the steps S10 to S16 before creating the consumer intention in FIG. 2 will be omitted, and differences will be mainly described as a more detailed embodiment of creation of the consumer intention.

Referring to FIGS. 13 and 14, the first consumer may execute a service application program in the first consumer terminal 10-1 and search for a desired business or item (S101). The service application server 100 searches for the received business or item name (SI02) and transmits the search result to the first consumer terminal 10-1.

When the first consumer may check the search result to obtain a desired result, that is, when there is a business or item matching a keyword (S103), the first consumer request a service for the corresponding business or item (SI04). The service application server 100 provides a payment request transmission and the corresponding service to the first consumer in conjunction with the payment server (not shown) and the business terminal 40 on the basis of the service for the business or item received from the first consumer terminal 10-1.

Meanwhile, when the first consumer may check the search result not to obtain a desired result, that is, when there is no business or item matching a keyword (S103), the first consumer confirms whether the keyword is a franchise name or an individual business name (S105). In this case, the franchise is referred to as a franchise registration business registered in the Fair Trade Commission or a business registered in a business database as a franchise store, and the individual business is referred to as a business that do not have information about the availability of franchise opening or a business that is not registered in the Fair Trade Commission as a franchise (for example, personally operated restaurant).

When the keyword is determined as a franchise name, the service application program of the first consumer terminal 10-1 recognizes the keyword as a franchise store opening request and transmits the request to the business district information provision server 50 (S106). The business district information provision server 50 creates information about disclosure of business-based business opening request on the basis of the franchise store opening request (S117). The created business-based business opening request may be read at the second consumer terminal 10-2 of the second consumer using the service application program (S118).

When the keyword is determined as an individual business name, the service application program of the first consumer terminal 10-1 loads a business-related information input window on a screen of the first consumer terminal 10-1 to allow the first consumer to additionally input business-related information, and transmits a business opening request to the business district information provision server 50 (S107).

In this case, as shown in FIG. 15, the business-related information input by the first consumer may include a business name, a main item, features, a location, and a representative picture. For example, when the first consumer makes a business opening request for "Dongwoo Haejang-guk", which is famous for a dried pollack hangover soup, as a consumer intention, a representative picture, business name "Dongwoo Haejang-guk", main item "dried pollack hangover soup", feature "soup is white and thick like seoleongtang soup", location "Yeouido-dong, Yeongdeungpo-gu, Seoul", and the like may be additionally input.

The business district information provision server 50 searches for the business opening request from a business information database on the basis of the input business-related information (S108). In this case, according to an embodiment, the business information database may be a business information database provided in the service application server. According to another embodiment, the business information database may be a business information storage unit provided in the business district information provision server, and the business information database and the business information storage unit may be interlocked with each other to update the business information. According to still another embodiment, the business information database may exist as a separate database module shared by the service application server and the business district information provision server. In the present embodiment, for convenience of explanation, it is assumed that the business information database is a business information storage unit provided in the business district information provision server.

The business information database searches for a business having been requested to search among pre-registered individual businesses or franchises (S109), and the business district information provision server 50 checks whether the business requested to search can be opened as a franchise store based on the search result (S110).

When the business requested to search can be opened as a franchise store, the corresponding business information is added and updated on the basis of the input information received from the first consumer terminal 10-1 (Sill).

In contrast, when the business requested to search cannot be opened as a franchise store, the business district information provision server 50 searches for a recommended business for the business name requested to search (S112). The business information database searches for businesses providing items the same as or similar to those of the business requested to open, and extracts a list of the businesses (S113), and the business district information provision server 50 creates a list of recommended businesses on the basis of the search result received from the business information database, and transmit the list to the first consumer terminal 10-1 (S114).

When the first consumer selects any one business from the recommended business list display on the first consumer terminal 10-1, the business district information provision server 50 determines this result as a business-based business opening request for the selected business, and creates information about disclosure of the business-based business opening request in order to disclose this information to other consumers (S117). The created business-based business opening request can be read at the second consumer terminal 10-2 of the second consumer using the service application program (S118).

When the first consumer dos not select any one business from the recommended business list display on the first consumer terminal 10-1, the business district information provision server 50 determines this result as an item-based business opening request for the item of the selected business, not the selected business itself, and creates information about disclosure of the item-based business opening request in order to disclose this information to other consumers (S117). The created item-based business opening request can be read at the second consumer terminal 10-2 of the second consumer using the service application program (S118).

The second consumer may read the business-based business opening request list or the item-based business opening request list at the second consumer terminal 10-2, and may indicate an agreement to any one business opening request thereof. When the business district information provision server 50 receives an agreement to the selected business-based business opening request or item-based business opening request from the second consumer terminal, and the business district information provision server 50 reflects this agreement in the consumer intention information of the second consumer (S122), and updates the business district information big data. In this case, as described in FIGS. 6 and 7, since the agreement means that the number of business opening requests having the same content increases as a consumer intention, the weighted value can be highly evaluated as the number of agreements increases as the business district information big data.

Meanwhile, when the second consumer reads the business-based business opening request list or the item-based business opening request list at the second consumer terminal 10-2, if there is no desired content in any one of the business opening requests, the second consumer may further read the business/item-based business opening request list until a desired content is discovered (S124).

As a result, the business opening request depending on the consumer intention according to the present embodiment is continually updated by the indication of the consumer intention, so as to sufficiently provide more information about the corresponding business to more consumers.

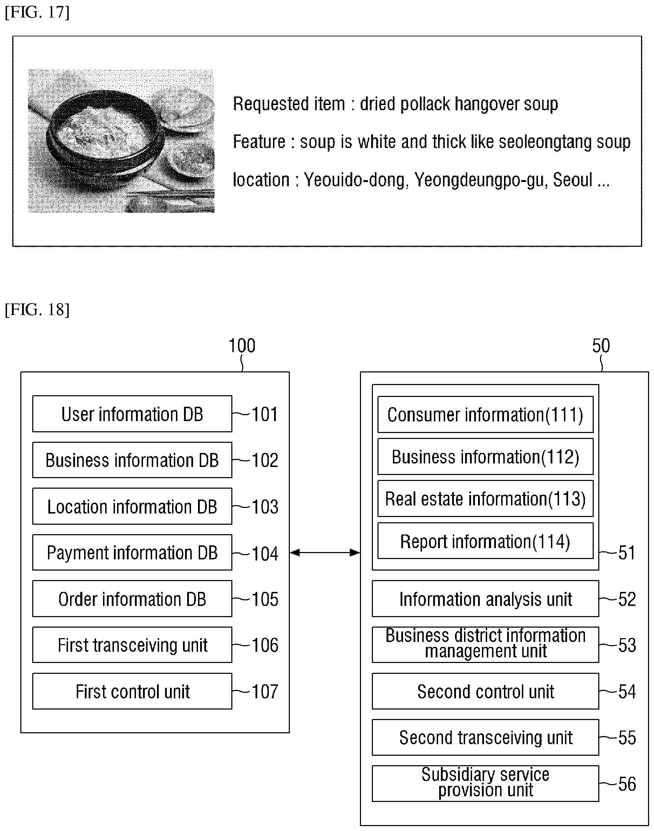

FIG. 16 is a flowchart showing still another example of a business district provision method of the business district information provision system shown in FIG. 1, and FIG. 17 is an example of an item-related information input window input by a consumer according to the embodiment of FIG. 16.

For convenience of explanation, descriptions of the steps S10 to S16 before creating the consumer intention in FIG. 2 will be omitted, and differences will be mainly described as a more detailed embodiment of creation of the consumer intention. Further, differences from the embodiments described in FIGS. 13 to 15 will be mainly described.

Referring to FIG. 16, steps S201 to S204 are as described in FIGS. 13 to 15.

When the first consumer may check the search result for a business name or an item name not to obtain a desired result, that is, when there is no business or item matching a keyword (S203), the first consumer confirms whether the keyword is created based on an item or based on a business (S205).

When the keyword is determined to be created based on a business, the first consumer terminal 10-1 checks whether the keyword is a franchise name or an individual business name (S206).Since the steps after S206 are the same as the steps after S105 described in FIGS. 14 and 15, a description thereof will be omitted.

When the keyword is determined to be created based on an item, the first consumer terminal 10-1 displays an item-related information input window on the screen, allows the first consumer to input additional information, and transmits a business opening request to the business district information provision server 50 based on the additionally input information.

In this case, as shown in FIG. 16, the item-related information input by the first consumer may include a request item, features, a request location, a representative picture, and the like. For example, when the first consumer makes a business opening request for a dried pollack hangover soup as a consumer intention, a representative picture, request item "dried pollack hangover soup", feature "soup is white and thick like seoleongtang soup", request location "Yeouido-dong, Yeongdeungpo-gu, Seoul", and the like may be additionally input.

The business district information provision server 50 searches for the business opening request from a business information database on the basis of the input business-related information (S208). In this case, the business information database is the same as that described in FIG. 13.

The business district information provision server 50 extracts a list of businesses providing items the same as or similar to the business opening request from the business information database (S209) to create a recommended business list, and transmits this recommended business list to the first consumer terminal 10-1 (S210). Since steps(B) after step S210 are the same as those after step (B) described with reference to FIGS. 13 to 14, a description thereof will be omitted.

This embodiment is different from the embodiment of FIGS. 13 to 15 in that it is possible to allow a consumer to input only desired item and make a business opening request. For example, if there is no dried pollack soup restaurant in the desired business district, it is possible to request the opening of businesses providing a specific dried pollack soup without referring to a specific company.

FIG. 18 is a block diagram specifically illustrating an example of the service application server and business district information provision server shown in FIG. 1.

Referring to FIG. 18, the service application server 100 includes a user information database 101, a business information database 102, a location information database 103, a payment information database 104, an order information database 105, a first transceiving unit 106, and a first control unit 107.

The user information database 101 stores consumer's login information for the consumer terminal 10 to access a service application program. The login information, for example, includes a consumer's name, contact and address, access log information, and social network information.

The business information database 102 stores information about businesses related to order requests and production requests. The business information database 102 stores the business name, item list, address, and contact of a business registered by automatic registration of business founder having received a business founding consulting, offline application of a business operator, or online application through the business terminal 40.

The information about businesses may include information about the entire domestic franchise shop name or store information provided by Small Enterprise and Market Service. The items processed by each store are grouped into categories of chicken, pizza, bossam and jokbal, Korean food, flour food, famous franchise, and the like in conjunction with the above-mentioned business information and are stored. According to another embodiment, the information about businesses may be grouped into each business by a unit area. In the present specification, the unit area may be an administrative area unit divided into cities, counties, districts, and dongs, or may be a residential area unit of an apartment complex or a village.

In an embodiment, in the case of restaurant business, table setting, the number of seats (the number of acceptable persons), menus sold as handling items and prices for menus, availability of delivery orders and time taken to complete delivery for each menu, availability of packing orders and time taken to complete packing, determining whether to receive seat reservations, the number of times of receiving orders per hour for delivery orders and packaging orders, areas capable of receiving delivery orders, and the like may be stored as business information.

In another embodiment, in the case of place rental business, the number of rooms (number of meeting rooms) and capacity per room, available subsidiary facilities, price per room and price of available subsidiary facilities, and the like may be stored as business information.

In another embodiment, in case of service business for consumer such as academy or hospital, service items and service time for each item, capacity of service per hour for each item, reception of visit reservation service, the number of times of reservation per hour, and the like may be stored as business information.

In another embodiment, in case of merchandising business, information about main products to sell, available time, and the like may be stored as business information.

Further, the business information database 102 transmits an order history according to the order request from the consumer terminal 10 to the business terminal 40 in accordance with the payment result received from the payment server, and monitors the real-time tracking status, waiting time, reservation status, and the like, received from the business terminal, and transmits them to the consumer terminal 10.

The location information database 103 stores local information, specifically, information about location and use of a building, entry shop information, building distribution, road information, and geographical information such as rice fields, fields, mountains, and rivers. Further, the location information database 103 may store distribution information of franchise stores owned by franchise holding company, distribution information of public facilities and industrial facilities, and distribution information of population together with geographical information by mapping this information in the geographical information.

The payment information database 104 stores payment information of pre-registered consumers, security programs for payment, and various programs according to payment processes in conjunction with the payment server on the basis of consumer login information.

The order information database 105 temporarily store information about order requests received from the consumer terminal 10.

The second transceiving unit 106 transmits and receives messages to and from the consumer terminal 10, the business terminal 40, the payment server (not shown), and the business district information provision server 50.

When the first control unit 107 receives an order request from the consumer terminal, the first control unit 107 temporarily stores the order request in the order information database 105, compares login information of a consumer having transmitting the order request with consumer information registered in the user information database 101, and compares an ordered business included in the order request and an items thereof with the business list and the item list thereof pre-registered in the business information database 102. When the order request is pre-registered in the business information database, the first control unit 107 transmits a payment request to the consumer terminal 10 in conjunction with the payment server on the basis of the information registered in the payment information database. When the first control unit 107 receives a payment result from the payment server according to the payment of the consumer terminal 10, the first control unit 107 transmits a production request for items to the business terminal 40 of the ordered business.

Meanwhile, when the order request is not pre-registered in the business information database, that is, when there is no item to be processed according to the order quest, the first control unit 107 transmits a desired business inconsistency notification to the business district information server 50.

The business district information server 50 includes a storage unit 51, an information analysis unit 52, a business district information management unit 53, a second control unit 54, and a second transceiving unit 55.

The second control unit 54 controls the operations of the storage unit 51, the information analysis unit 52, the business district information management unit 53, and the second transceiving unit 55.

When the second control unit 54 receives the inconsistency notification for the order request from the service application server 100, the second control unit 54 transmits a message asking whether or not to apply for a consumer intention to the consumer terminal 10.

When the agreement for the application and the consumer intention are returned from the consumer terminal 10, the second control unit 54 transmits the returned agreement and consumer intention, and analyzes the contents of the content intention.

The information analysis unit 52 extracts the consumer information, the business type, the business name, or the application area, the user's desire opinion, or the like based on the consumer intention.

The storage unit stores the consumer intention information, business information, real estate information, consumer information, the business district information big data, or the like, extracted by the information analysis unit 52. In an embodiment, the storage unit 51 is interlocked with the user information DB 101, the business information DB 102, the location information DB 103, the payment information DB 104 and the order information DB 105 of the service application server 100 to be able to share basic information for forming the business district information big data.

For example, the storage unit 51 may include a consumer information storage unit 111, a business information storage unit 112, a real estate information storage unit 113, and a report information storage unit 114.

The consumer information storage unit 111 stores the consumer information including the age, sex and report location for the consumer having created the consumer intention, the usage log information of the service application, the social network information, and the like.

The business information storage unit 112 stores the business information including the business name, the item list, business location, business contact, and the like.

The real estate information storage unit 113 stores the real estate information including geographic information including facility information, map information reflecting the local information, and the like.

The report information storage unit 114 stores the consumer intention information, the consumer's desired opinion, and the log information for the consumer intention information. In this case, the log information for the consumer intention information refer to business type or business name, items to be processed, the number of times of display of the consumer intention matching the inconvenience report area, and the history of consumer intention reception by other consumers.

The second transceiving unit 55 is connected to the consumer terminal 10 or the service application server 100 to transmit and receive a message.

The business district information management unit 53 is combined with business information, real estate information, consumer information, and consumer intention information to generate business district information big data. When a founder quests a consulting later, the business district information management unit 53 generates customized business district information for a business founding consulting using the business district big data according to the criterion of the request of the founder.

According to an embodiment, the business district information provision server 50 may further include a subsidiary service provision unit 56.

When the consumer intentions matching the business name, business type, item list, and the application area are received the preset threshold number of times or more, the subsidiary service provision unit 56 stores compensation service information provided to the consumer having created the consumer intention, and transmits a push notification for providing the compensation service information to the consumer terminal 10.

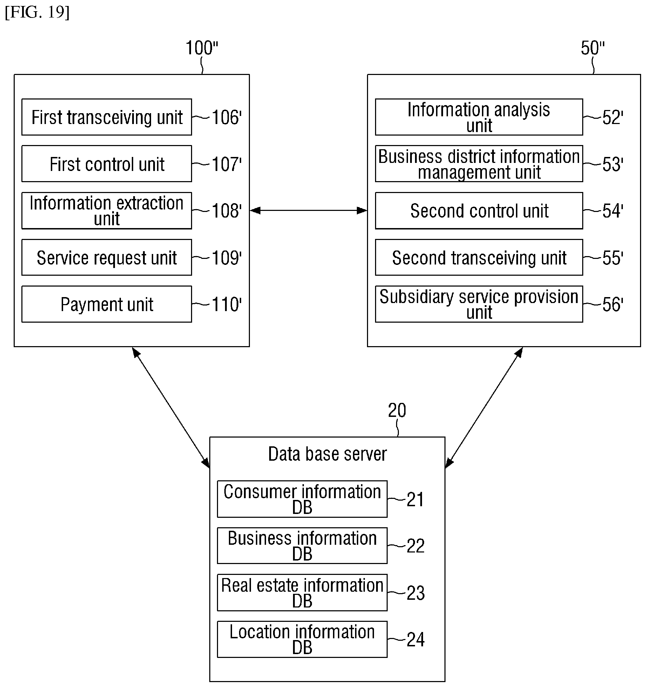

FIG. 19 is a block diagram specifically illustrating another example of the service application server and business district information provision server shown in FIG. 1.

Referring to FIG. 19, unlike FIG. 18, the service application server 100 and the business district information provision server 50 may interlock with the database server 20 which exists separately therefrom.

The database server 20 includes a consumer information database (hereinafter referred to as a DB) 21, a business information DB 22, a real estate information DB 23, and a location information DB 24.

The consumer information DB 21 stores the consumer information including the age, sex, report location, usage log information of the service application, social network information, and the like for the consumer who creates the consumer intention.

The business information DB 22 stores registered business information including the business name, the business item list, the business location, the business contact number, and the like.

The real estate information DB 23 stores the real estate information such as geographical location information including facility information and map information reflecting the district information.

The location information DB 24 may store the location information, more specifically, location and usage of a building, entry business information and building distribution, road information, rice fields, fields, mountains, rivers and streams, or the like and further, store distribution information, information on distribution of public facilities and industrial facilities, and information on population distribution of franchise stores owned by a franchise holding company mapped to the geographical information together.

Further, although not shown in the drawings, the database server 20 may further include a payment information DB, an order information DB, a report history DB, a business district information big data DB, and the like.

The payment information DB stores payment information of a pre-registered consumer, a security program for payment, various programs according to a payment process, etc., based on consumer login information by interlocking with the payment server.

The order information DB temporarily stores information on an order request received from the consumer terminal 10.

The report information DB stores log information for the consumer intention information, the consumer's desire opinion, and the consumer intention information. In this case, the log information for the consumer intention information means the number of the consumer intention indications and a consumer intention acceptance history by another consumer with which the business type or business name, the item to be processed, the inconvenience report area coincide.

The business district information big data DB stores business district information big data received from the business district information provision server or stores customized business district information later requested by the founder.

The service application server 100 includes a first transceiving unit 106', a first control unit 107', an information extraction unit 108, a service request unit 109, and a payment unit 110.

The first transceiving unit 106' transmits/ receives a message to/from the consumer terminal 10, the business terminal 40, a payment server (not shown), the database server 20, and the business district information provision server 50.

Upon receiving the order request from the consumer terminal 10, the first control unit 107' temporarily stores the order request in the order information DB (not shown) of the database server 20, compares login information of a consumer who transmits the order request with consumer information registered in the consumer information DB 21 of the database server 20 and verifies the login information, and compares an order target business and items to be processed thereby, which are included in the order request with a business list and an item list to be processed thereby, which are pre-registered in the business information DB 22.

The information extraction unit 108 requests the information required by the first control unit 107' described above from the database server 20 or extracts the information to be stored in the database server 20 and requests or transmits the requested or extracted information to the first transceiving unit 106'. As a result, the service application server transmits/receives the corresponding information to/from the database server 20 to provide a service according to a service request of the consumer or transmits a notification of the desired business inconsistency for the order request to the business district information provision server 50.

When the corresponding business is a business where the order request is pre-registered in the business information DB 22, the control unit 107' transmits the payment request to the consumer terminal 10 by interlocking with the payment server (not shown) with the information registered in the payment information DB (not shown). When the service request unit receives the payment result from the payment server in response to the payment of the consumer terminal 10, the service request unit transmits a production request for the item to be processed to the business terminal 40 of a business which gives an order. Alternatively, when the corresponding business is not a business in which the order request is pre-registered in the business information DB 22 or there is no item to be processed according to the order request, the service request unit transmits the notification of the desired business inconsistency for the order request to the business district information provision server 50.

When the corresponding business is the business where the order request is pre-registered in the business information DB 22 according to the embodiment, the payment unit 110 transmits the payment request to the consumer terminal 10 by interlocking with the payment server (not shown) with the information registered in the payment information DB (not shown) and receives the payment result from the payment server in response to the payment of the consumer terminal 10.

The business district information provision server 50 includes an information analysis unit 52', a business district information management unit 53', a second control unit 54', a second transceiving unit 55', and a subsidiary service provision unit 56'.

The second control unit 54' controls operations of the information analysis unit 52', the business district information management unit 53', and the second transceiving unit 55'.

When the second control unit 54' receives the inconsistency notification of the order request from the service application server 100, the second control unit 54' transmits a message for asking whether to apply for the consumer intention to the consumer terminal 10.

When the second control unit 54' receives consent and the consumer intention depending on the application from the consumer terminal 10, the second control unit 54' transmits the consent and the consumer intention to the information analysis unit 52' to analyze contents of the consumer intention.

The information analysis unit 52' extracts the consumer information, the business type, the business name or the application area, the user's desire opinion, etc., based on the consumer intention.

The second transceiving unit 55' is connected with the consumer terminal 10, the service application server 100, and the database server 20 to transmit/receive the message through the second transceiving unit 55'.

The business district information management unit 53' generates the business district information big data in combination with the business information, the real estate information, the consumer information, and the consumer intention information based on the extracted information. When the founder requests consulting later, the customized business district information for entrepreneurial consulting is generated by using the business district information big data according to a request criterion of the founder. In this case, the business district information big data or the customized business district information are transmitted to and stored in the database server 20.

According to the example, the business district information provision server 50 may further include the subsidiary service provision unit 56'.

The subsidiary service provision unit 56' stores compensation service information to be provided to the consumer who creates the consumer intention and transfers a push notification for providing the compensation service information to the consumer terminal 10 when the consumer intention in which the business name or the business type, the item to be processed, the application area, etc., are consistent is received at a predetermined number of times or more.

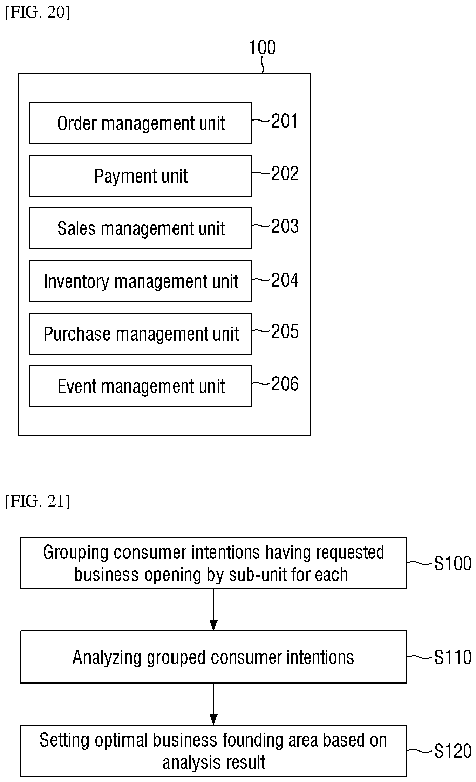

FIG. 20 is a diagram more specifically illustrating the business information database shown in FIG. 18.

Referring to FIG. 20, the business information database 102 includes an order management unit 201, a payment unit 202, a sales management unit 203, an inventory management unit 204, and a purchase management unit 205.

The order management unit 201 records the order history corresponding to the order request from the consumer terminal 10 for each category and updates a real-time order status and a waiting time. For example, the order history may be sorted into a table order, a general order, a delivery order, a packing order, etc., depending on how the ordered items to be processed are sent (delivered).

Further, the order management unit 201 may monitor a real-time tracking status, the waiting time, a reservation status, etc., by receiving business status information from the business terminal 40.

The payment unit 202 calculates a billing cost corresponding to the order request and notifies the billing cost to the payment server 20. That is, a total billing cost is calculated by calculating the respective costs according to the items to be processed and the quantity included in the order history and the billing cost for the order history is transferred to the payment server 20 so that online payment is made by the consumer terminal 10. Alternatively, the payment unit 202 transfers the billing cost for the order history to the business terminal 40 so as to enable the consumer to make offline payment using other payment means such as a credit card, cash payment or a gift card, a gifticon, mobile money, etc., in the business.

The sales management unit 203 records and stores the order history in which the billing cost is paid through the payment server 20 in the order history. The sales management unit 203 may record and store not only the billing cost paid through the payment server 20 but also an offline payment history performed in the business.

The inventory management unit 204 monitors the status of remaining raw materials and the items to be processed which remain by subtracting the consumed raw materials or items to be processed according to the order history of which payment is completed in a raw material history in the raw material history of the business.

The purchase management unit 205 records and stores a history of raw materials purchased by the business and cost expenses.

Meanwhile, the business information database 102 may further include an event management unit 206.

The event management unit 206 registers event contents performed in the business and provides the event contents to the consumer terminal. In this case, the registered event contents refer to publicity event contents for the consumer such as a discount, discount coupon provision, specific menu provision, free gift provision, etc., which are performed for a predetermined period in the business. The service application server 100 may first expose the registered event contents to the consumer terminal by a method that provides the registered event contents to the consumer terminal 10 as a type such as a corresponding area event business list, etc., or first searches a business that sets the event.

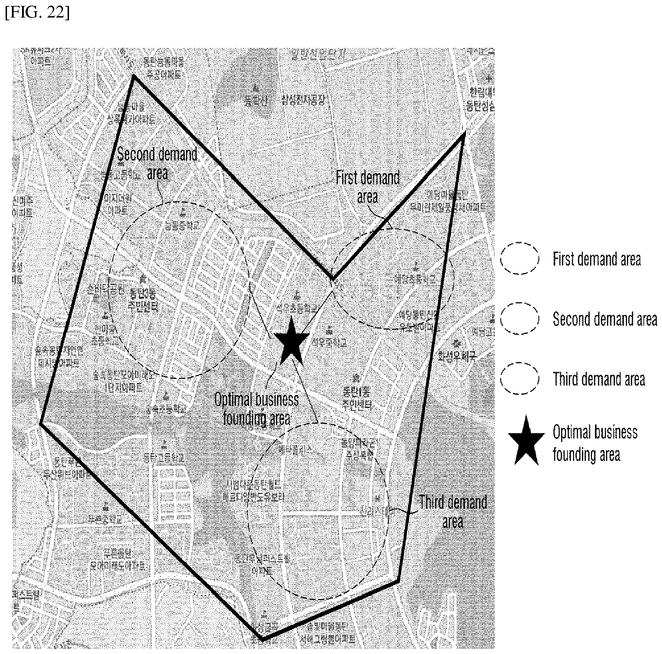

FIG. 21 is a flowchart illustrating a method of setting an optimal business founding area of the business district information provision server shown in FIG. 1 and FIG. 22 is a map for explaining the optimal business founding area shown in FIG. 21.

As an example, when a case of setting the optimal business founding area is described, as illustrated in FIG. 21, the business district information provision server first groups consumer intentions of requesting the same business by sub-unit for each area based on the business district information big data (S100). In this case, the unit of the grouping area may be a unit of an administrative district such as city, county, district, dong, or the like and may be a local unit according to resident convenience such as apartment complex, dong, a village, or the like.

The business district information provision server analyzes the grouped consumer intentions (S110). More specifically, the business district information provision server analyzes the consumer intention according to a main keyword for each item extracted when generating the business district information big data. The main keywords of each item may be the consumer information, the business type, the business name or application area, the item, the service item, the consumer's desire opinion, etc., included in the consumer intention.

As an example, the consumer intention grouped for each area may be secondarily grouped again according to the business type, the business name, the item, and etc.

The business district information provision server may set the optimal entrepreneurial area based on the analysis result (S120) and provide the set business founding area to the founder. The optimal business founding area may be an area that considers the consumer intention, a distance, transportation, or cost. For example, as illustrated in FIG. 22, when the consumer intention is grouped into a first demand zone or a third demand zone based on the same business type, business name, item, and area, a place (an area marked by an asterisk) where a profit of the founder may be maximized may be set as the optimal business founding area by comparing a minimum distance (e.g., a distance range in which the consumer is willing to move, a deliverable range of the relevant business type, or a minimum distance interval of franchise opening through traffic use).

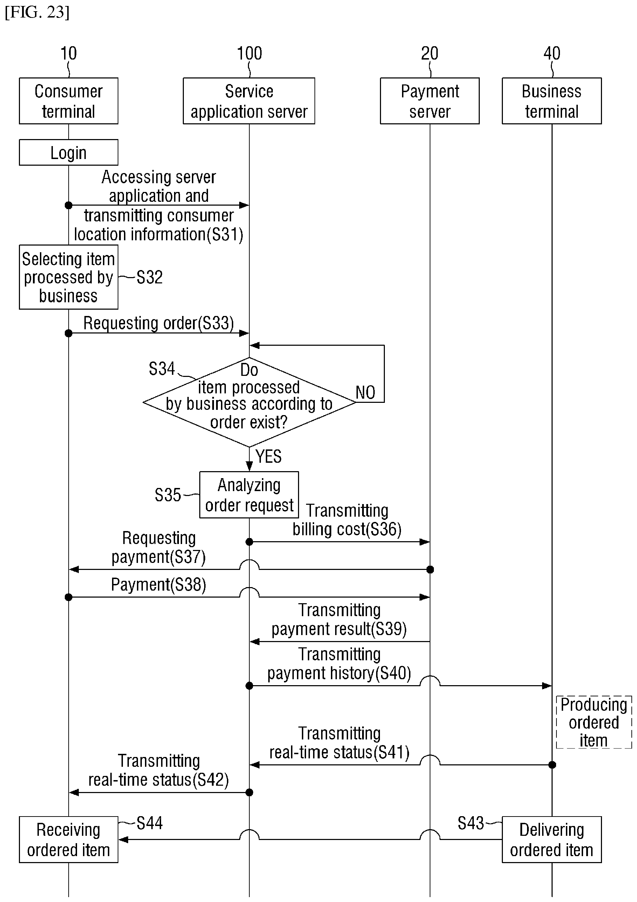

FIG. 23 is a flowchart showing a method of providing a sales management of the service application server shown in FIG. 1.

Referring to FIG. 23, 23, the consumer accesses the service application server 100 through the login in the service application program of the consumer terminal 10. The service application server 100 may receive connection location information of the consumer terminal 10 from the login information (S31).

The consumer executes the service application program in the consumer terminal 10 to search for the business and the item to be processed, which is desired to be ordered (S32). In this case, the consumer may set the search range in consideration of the waiting time of the business which produces the item to be ordered or whether the service may be used over time and the service application server 100 provides a business list corresponding to the set search range in the registered business to allow the consumer to conveniently select the business list (e.g., searching after selecting chicken as an item name and within 30 minutes as a deliverable time or searching a bookable business with rib as the item name, 18:00 as a selection time, and 10 as the number of persons).

When the consumer selects the desired business name, business type, or handling item through the consumer terminal 10 (S33), the service application server 100 searches whether the desired business name or business type and the handling item according to the order are included in business information pre-registered in the desired area (S34). When there is a business matching the pre-registered business information, the service application server 100 analyzes the order request received from the receiver terminal (S35), confirms the order history regarding the business name, the handling item, and other specific items, and calculates the billing cost depending on the order history and transmits the calculated billing cost to the payment server 20.

According to an example, the consumer may make individual inquiries about the desired item to the founder as an online to offline (O2O) service at the time of requesting the order through the service application program. The founder actively responds to the individual inquiries of the consumer, thereby enhancing consumer satisfaction with the operation of the business.

The payment server 20 transmits a payment request for the billing cost to the consumer terminal 10 (S37) and when payment is made by a payment means the consumer terminal (S38), the payment server 20 transmits the payment result to the service application server 100 (S39).

The service application server 100 transmits the order history of which payment is completed to the business terminal 40 and the business produces the corresponding order item in accordance with the order history received by the business terminal 40. The order item may be a product generated by the business itself according to various examples, a service provided by the business, or a product or service produced by outsourcing to another business associated with the business. In this case, the status of the business for the received order history, the reservation history, or the order item being produced is monitored in real time and transmitted in real time to the service application server 100 (S41). Further, the status for the real time order history, reservation history, or the order time being produced may be transmitted from the business terminal 40 to the service application server 100 as business status information (S42).

When the production of the order item is completed in the business, the order item of which production is completed is sent from the business terminal 40 to the consumer terminal 10 (S43) and provided to the consumer terminal 10 or delivered to the consumer to allow the consumer to receive the order item (S44).

The business terminal 40 may collectively perform purchasing/sales, inventory management, and the like in connection with the order items which are paid and sent. More specifically, the founder inputs the purchase and purchase due to the purchase of the raw material of the corresponding order item, the sales and inventory management due to the exhaustion of the order item, and the like in the business terminal 40 and generally manages the purchase, the sales, and the inventory management, thereby reducing a time and labor cost required for the operation of the business.

Further, the service application server 100 may display an order availability request, the waiting time, the reservation status, and the like to the consumer on the basis of the business status information received from the business terminal 40 to enhance business use convenience and promote a business operation result of the founder.

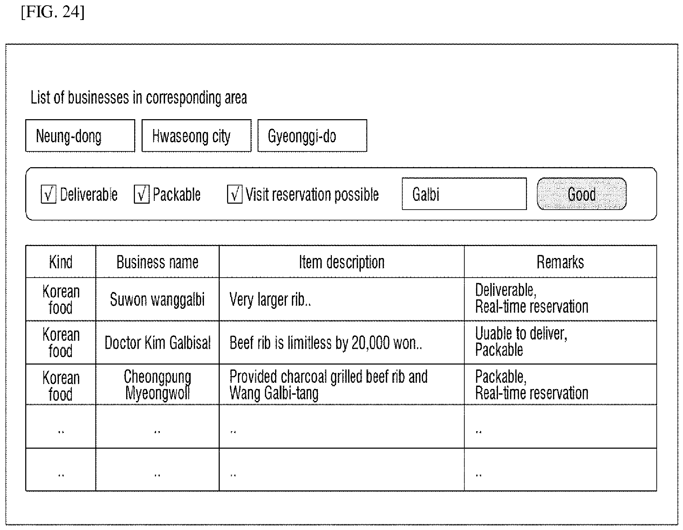

FIG. 24 is a diagram illustrating an example of a business shop list within the corresponding area displayed on a consumer terminal for receiving an order request of a consumer.

The service application server 100 is located within a predetermined radius at a specific point in the consumer terminal 10 through the service application program to provide the registered business list. The specific point may be access location information of the consumer terminal 10 or a location set by the consumer.

The provided business list as a business list registered in the service application server 100 may be businesses founded after consulting in accordance with the business district information big data of the business district information provision server 50 according to an example. Further, according to another example, the provided business list may be existing business information, that is, information on all domestic franchise shop names or shop information provided by a small-scale business market promotion corporation.

The business list may include a brief description of category (type) depending on the handed item, the business name, the processed item and a brief description of the order request such as availability of delivery, an ordering method, availability of reservation, etc.

The business list may be enumerated primarily with keywords input in a search window. For example, as illustrated in FIG. 8, when a search term 'rib' is input, a list of businesses located within a predetermined radius centered on 'Neun-dong, Hwaseong city, Gyeonggi-do' which is a specific point may be provided while using 'rib' as the processed item. When the consumer satisfaction with the provided business list is high, the consumer intention may be displayed by pressing a 'thumbs' button on the list and the business district information provision server 50 may reflect the consumer intention to the business district information big data as the consumer intention.

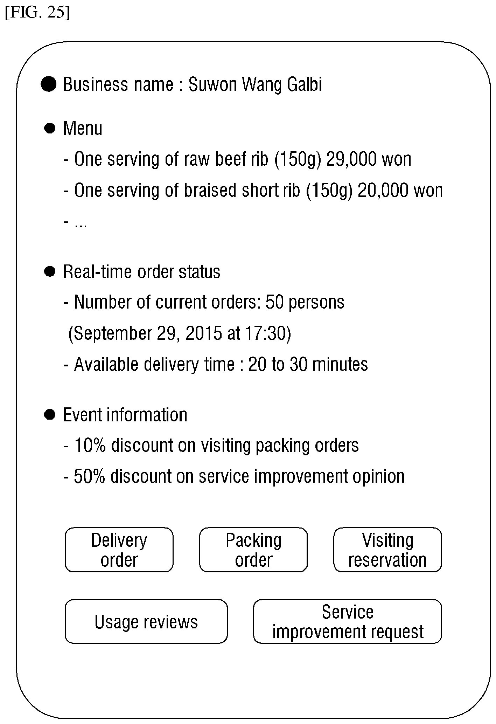

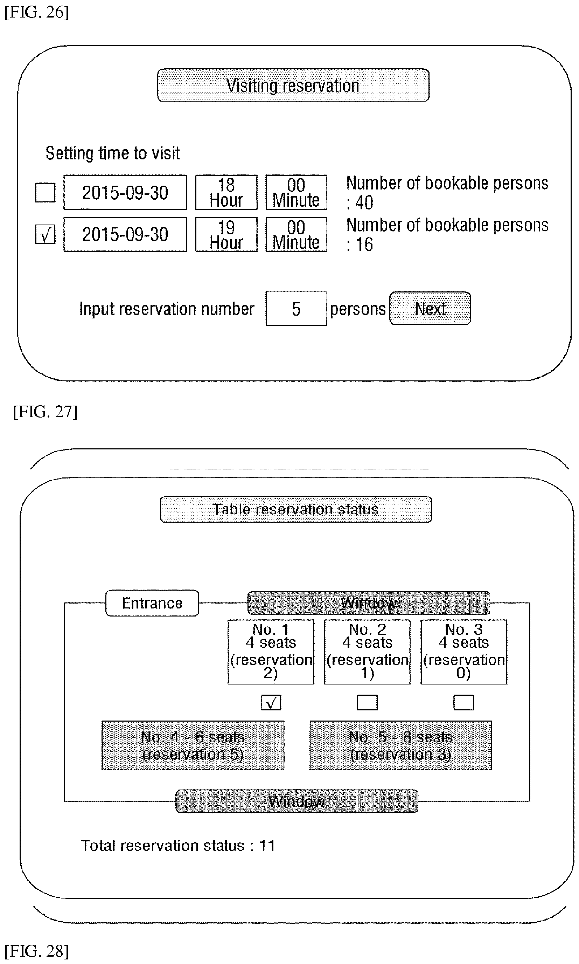

FIG. 25 is a reservation content confirmation screen displayed on a consumer terminal according to the order request of a consumer and FIG. 26 is an example of a visiting reservation confirmation screen displayed on a consumer terminal according to the order request of a consumer.

When the consumer displays the business, the processed item, and other items to request the order through the service application program, reservation confirmation information for the order request item may be provided to the consumer terminal 10 as illustrated in FIG. 25.

For example, when the consumer requests an order for "one serving of raw rib" and "one serving of braised ribs" of a business called 'Suwon King Rib', the business terminal 40 may notify a current waiting number and a current waiting time of the corresponding consumer to the consumer terminal based on business status information provided to the service application server 100.

The consumer confirms the above information on the order request item to select the order method (delivery order, packing order, or visiting reservation).

When the consumer selects the visiting reservation, the consumer may set a scheduled visit time in the service application program as illustrated in FIG. 26. In order to facilitate the selection of the visiting reservation, the service application server 100 may provide the reservable personnel information together to the consumer terminal based on the business status information.

In this case, the order may be requested by displaying a demand (the number of reservation persons illustrated in FIG. 26) of the processed items together in the order request item.

Further, the consumer may receive a service corresponding to the selected order request item and then, create a consumer review or a service improvement request in the service application as illustrated in FIG. 25.

FIG. 27 is another example of a visiting reservation confirmation screen displayed on a consumer terminal according to the order request of a consumer.

Meanwhile, in the case of a restaurant business, unlike FIG. 26, the service application server 100 may provide the order status to the consumer terminal 10 together with a seat layout diagram through the service application program. In this case, the consumer may make the order request so as not to overlap with the other consumer, considering a seat layout and the order status of the business at a specific time.

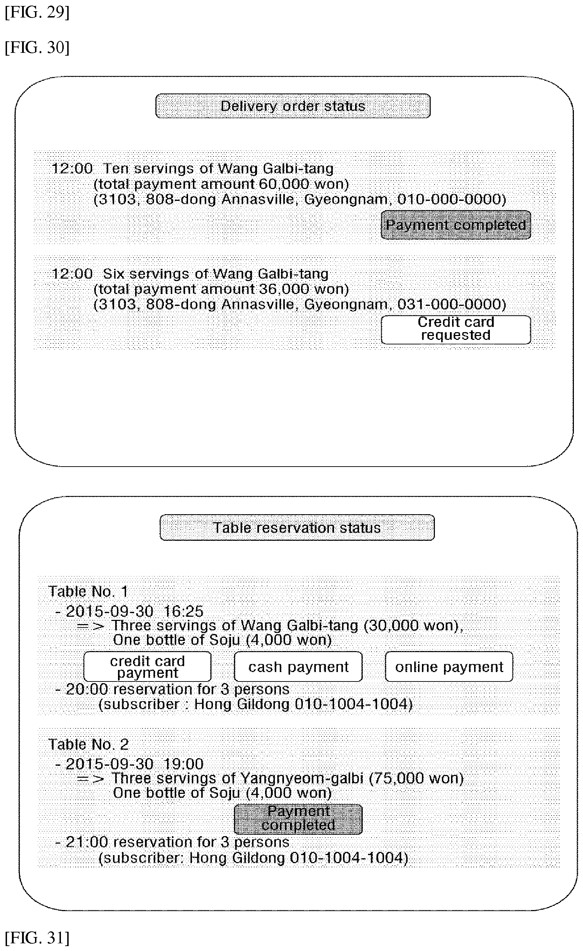

FIG. 28 is an example of a visiting reservation confirmation screen displayed on a business terminal according to the order request of a consumer. FIG. 29 is another example of a visiting reservation confirmation screen displayed on a business terminal according to the order request of a consumer, and FIG. 30 is still another example of a visiting reservation confirmation screen displayed on a business terminal according to the order request of a consumer.

The business founder may confirm the order request received from the consumer online and offline through the business terminal 40 interlocked with the service application server 100.

The confirmed order requests may be provided in the form of a list in a time order or may be provided in a form listed for each table seating layout as illustrated in FIG. 28. In this case, when one of the table seats is selected, the business founder may view the status of each table reserved in the business terminal as a preview or confirm the reservation status through a pop-up window.

As illustrated in FIG. 29, the business terminal 40 may display the order history for each table and the reservation status for each time zone to the founder by interlocking with the service application server 100.

The table reservation status displayed in this case indicates the completion of payment when the consumer has already made payment through the consumer terminal (table #2) and provides a payment related menu (credit card payment, cash settlement, online payment, etc.) so that the consumer may make the payment through various payment means when the consumer requests the order by visiting reservation, but makes the payment offline (table #1).

Further, as illustrated in FIG. 30, the business terminal 40 may display the delivery order history and the delivery order status to the founder by interlocking with the service application server 100.

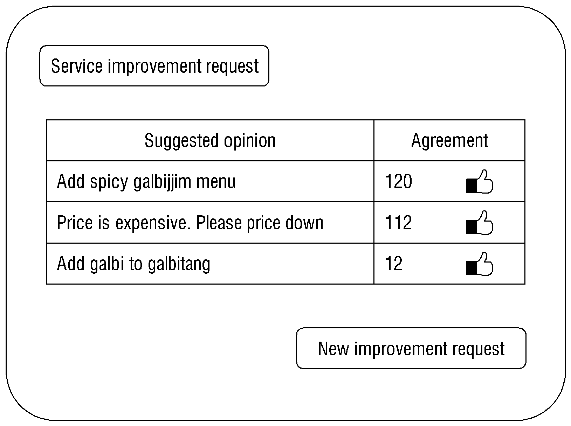

FIG. 31 is an example of a service improvement request screen for the business shown in FIG. 25.

The consumer may create the consumer review or service improvement request in the service application program of the consumer terminal 10.

Although not shown in the drawings, evaluation of the quantity and quality of the items processed for the order request history provided, evaluation of a service satisfaction index, and the like may be created by a grade as the consumer review and the consumer review may include other opinion items in which the opinion is personally created.

The consumer may propose various opinions through the service application program that may be presented to the business operator or founder, such as adding products or menus, requesting service improvement, requesting price reduction, requesting quality improvement, requesting location transfer, etc.

The business strict information provision server may provide the corresponding consumer information to the business operator who opens a business corresponding to the consumer intention or improves the menu addition/service so as to provide a compensation service to the consumer who proposes the opinion.

In an example, as illustrated in FIG. 31, it is possible to display a request for opening an additional desired item (adding a spicy braised rib menu), a comment on a price, an opinion on an existing item to be sold (please, add more ribs), etc. In this case, the consumer intention may be displayed in such a manner that a 'Request New Improvement' button is pressed to personally create the consumer review or other opinions or the consumer agrees with another consumer by clicking on a favorite menu on a list of opinions created by another consumer.

As a result, according to the business district information providing system of the present invention, the founder receives the consulting service based on the business district information big data provided by the business district information provision server 50 of the present invention to previously determine a substantial demand of a desired business type or a desired business (brand) to be founded, thereby increasing business founding success rate.

In addition, the business founding success rate of the founder may be enhanced by providing business district information of a best location designed based on the business district information big data to which a business district information related intention of a real demander is reflected to the founder.

Further, according to the business district information providing system of the present invention, the consumer may collectively perform the purchase, sales, and inventory management through the service application server 100 and analyze even consumer's order histories and consumer's consumption propensity in the service application service 100 in connection with the information input in the business terminal, thereby operating the business more efficiently.

In addition, according to the business district information providing system of the present invention, since the consumer may determine the status of the business and make the order or make the reservation in real time at the time of using the business founded by the request thereof, the consumer may more conveniently use the business.

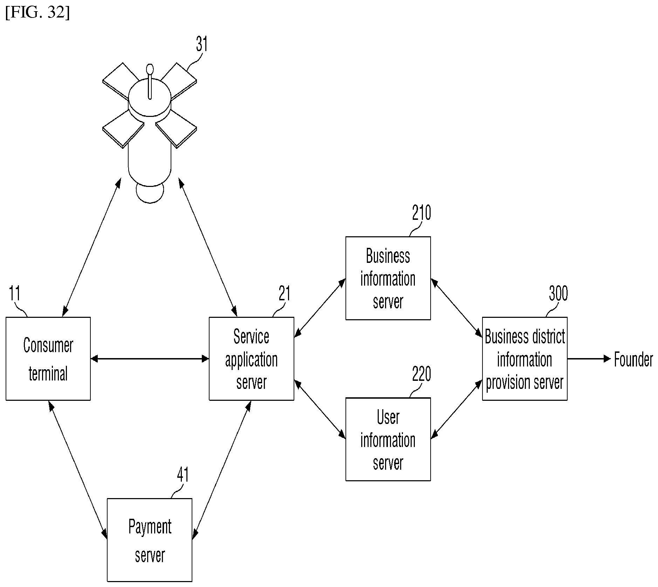

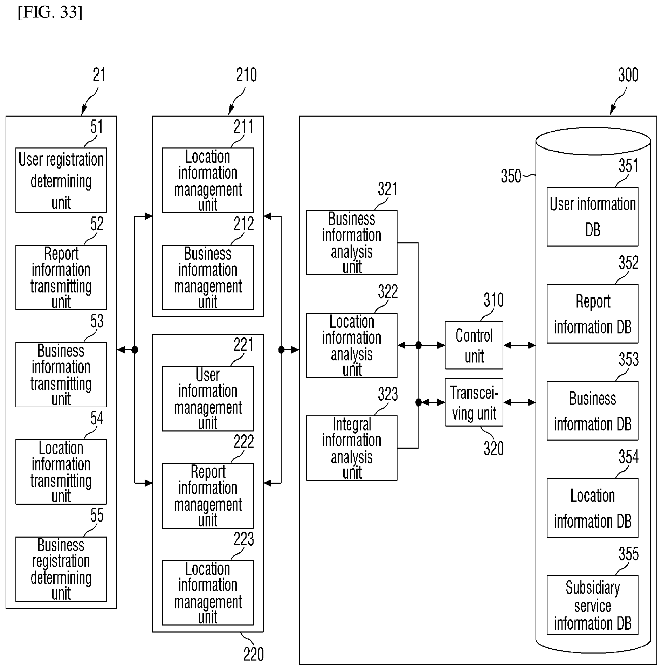

FIG. 32 is a block diagram showing a business district information provision system according to another embodiment of the present invention and FIG. 33 is a block diagram more specifically showing the business district information provision system of FIG. 32. For convenience of explanation, differences from FIG. 1, 18, or 19 will be primarily described.

Referring to FIG. 32, the business district information providing system includes the consumer terminal 11, the service application server 21, the payment server 41, a business information server 210, a user information server 220, and the business district information provision server 300.

Referring to FIGS. 32 and 33, the business information server 210 and the user information server 220 are added unlike in FIG. 1.

The business information server 210 may include a location information management unit 211 and a business information management unit 212. The business information management unit 212 may store business information including information on all domestic franchise shop names or shop information provided by the small-scale business market promotion corporation, and items processed by each shop are grouped to pizza, pig's feet and boiled pork wrapped in greens, Korean food, snack, famous franchise category, etc, and stored in link with the business information. The location information management unit 211 stores and manages geographical distribution information based on an address of the business information. In this case, information on a predetermined minimum unit distance at which the same businesses need to be separated from each other according to characteristics of the business type may be included and stored.

The user information server 220 may include a user information management unit 221, a report information management unit 222, and a location information management unit 223. The user information management unit 221 stores basic information of a user who uses the consumer terminal 11, for example, age, sex, report location, usage log information of the service application, social network information, etc.

The report information management unit 222 stores the consumer intention received from the consumer terminal 11, log information, and URL information generated by the business district information provision server.

The location information management unit 223 stores a location tracked by a GPS satellite 31 of the consumer terminal 11, an inconvenient report area, or residence information.

The business district information provision server 300 includes a business information analysis unit 321, a location information analysis unit 322, an integrated information analysis unit 323, a control unit 310, a transceiving unit 320, and a storage unit 350.

The transceiving unit 320 is connected to the consumer terminal 11, the service application server 21, the business information server 210, and the user information server 220 to transmit and receive various messages. More specifically, the transceiving unit 320 receives the consumer intention from the consumer terminal or transmits the push notification to the consumer terminal. Further, the transceiving unit 320 may receive the desired business inconsistency notification from the service application server 21 or receive registered business information or registered user information from the business information server or the user information server.

The business information analysis unit 321 extracts the business type or the business name, the processed item, etc., from the consumer intention received from the consumer terminal.

The location information analysis unit 322 extracts the inconvenient report area from the consumer intention received from the consumer terminal or extracts the location information of a receiver terminal and analyzes an optimum location condition for the business founding consulting data based on local information and map information.

The integrated information analysis unit 323 generates the business district information big data including information on the business name of which opening is required or whether the same business exists within a predetermined radius based on the inconvenience report area or the location of the receiver terminal, log information of a common consumer intention, demander distribution information, real estate information, and the map information by reflecting the analysis results of the business information analysis unit 321 and the location information analysis unit 322. Further, when the founder requests consulting later, the integrated information analysis unit 323 generates business district information for the business founding consulting by using the business district information big data according to a request criterion of the founder.

The storage unit 350 stores the business district information big data and the compensation service information.

The storage unit 350 includes a user information database 351, a report information database 352, a business information database 353, and a location information database 354.

The user information database 351 stores user information of the user terminal which transmits the consumer intention in link with the user information server 220.

The report information database 352stores the consumer intention and log information thereof in link with the user information server 220.

The business information database 353 stores request information for the business extracted from the consumer intention and stores pre-registered business information in link with the business information server 310.

The location information database 354 stores at least one of the location information of the consumer terminal, the location information of the pre-registered business, and the inconvenient report area information in link with the user information server 220 and the business information server 210.

The storage unit 350 may further include an additional service information database storing the compensation service information for providing to the consumer who creates the consumer intention when the consumer intention in which the business name or the business type, the processed item, the application area, etc. coincide is received at a predetermined number of times or more.

The control unit 310 controls the operations among the transceiving unit 320, the business information analysis unit 321, the location information analysis unit 322, the integrated information analysis unit 323, and the storage unit 350. Further, when the consumer intention is received from the receiver terminal, the control unit 310 generates a URL address corresponding to the user's intention and notifies the URL address to the receiver terminal 11 through the transceiving unit 320.

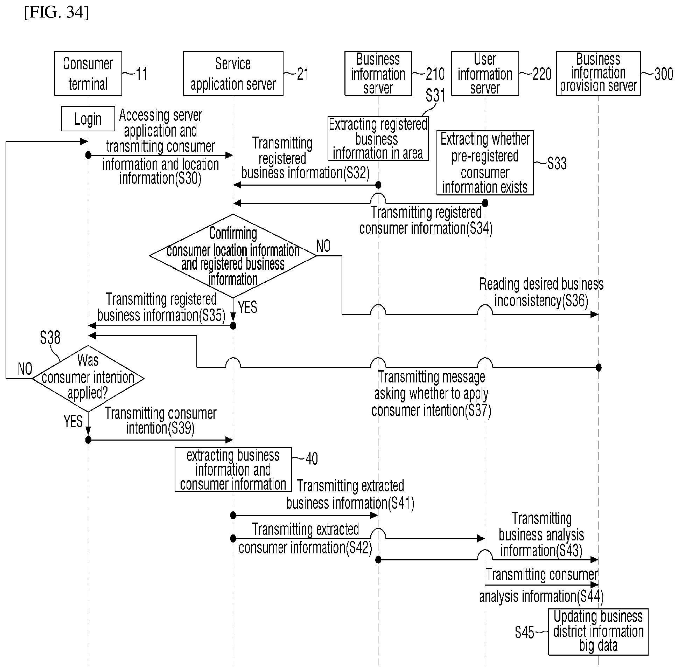

FIG. 34 is a flowchart showing an example of a business district provision method of the business district information provision system shown in FIG. 32.

Referring to FIG. 34, when the consumer terminal 11 first logs into the service application, the service application server 21 receives consumer information and location information of the consumer from the consumer terminal 11 (S30).

The service application server 21 requests registered business information in an area to which the location information belongs in link with the business information server 210 and the business information server 210 extracts the registered business information in the corresponding area (S31) and transmits the extracted registered business information to the application server 21 (S32). The service application server 21 requests information on a user who uses the consumer terminal in link with the user information server 220 and the user information server 220 extracts information on a pre-registered user who uses the service application (S33) and transmits the extracted pre-registered user information to the application server 21 (S34).

The service application server 21 confirms the consumer information, the consumer location information, and the registered business information received from the business information server and the user information server and transmits the registered business information in which the registered business, the processed item, and the area are mapped to the consumer information to the receiver terminal 11 (step S35).

However, when there is no registered business information in which the registered business, the processed item, and the area are mapped to the consumer information, the service application server 21 transmits the desired business inconsistency notification to the business district information provision server 300 (S36) to allow the business district information provision server 300 to transmit a message for asking whether to request the consumer intention to the consumer terminal 11 (S37).

When the user agrees to application of the consumer intention in the consumer terminal 11, the user creates the corresponding contents according to an example and transmits the created contents to the service application server 21. The message transmitted to the service application server 21 may be agreement to the application of another consumer according to another example or agreement to nay one of business recommendation lists according to yet another example. In addition, the consumer intention may be selected from one or more similar menus or similar business types recommended for the consumer in the business district information system based on a keyword searched by the consumer.

The service application server 21 extracts the business information including the business name, the business type, and the processed item of the corresponding business and the consumer information including user basic information from the received consumer intention (S40) and transmits the extracted business information and the consumer information to the business information server 210 and the user information server 220, respectively (S41 and S42).

The business information server 210 analyzes the business information to which the consumer intention is reflected and transmits the analyzed business information to the business district information provision server 300 (S43) and the user information server 220 analyzes the consumer information for the user who shows the consumer intention and transmits the analyzed consumer information to the business district information provision server 300 (S44).

The business district information provision server 300 generates the business district information big data including information on the business name of which opening is required or whether the same business exists within a predetermined radius based on the application area or the location of the receiver terminal, log information of a common consumer intention, demander distribution information, real estate information, and the map information by reflecting the analysis results. Further, when the founder requests consulting later, the customized business district information for business founding consulting is generated by using the business district information big data according to the request criterion of the founder.

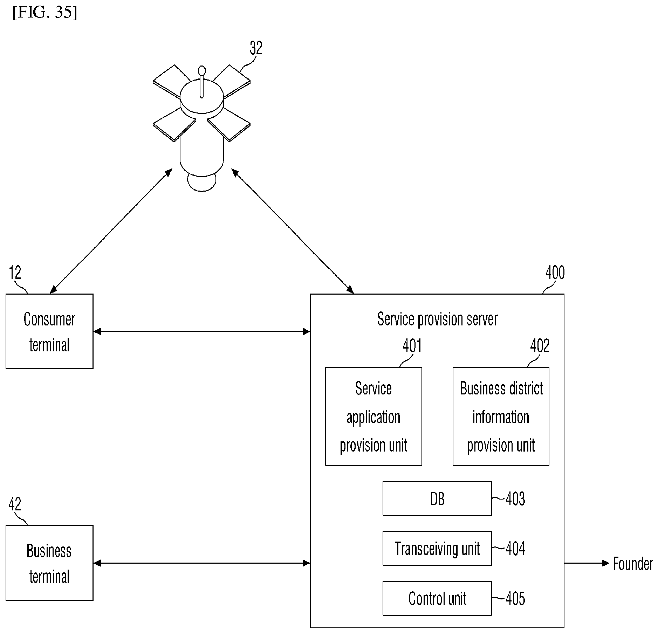

FIG. 35 is a block diagram showing a business district information provision system according to still another embodiment of the present invention.

Referring to FIG. 35, the business district information providing system includes the consumer terminal 12, a GPS satellite 32, the business terminal 42, and a service provision server 400, unlike FIG. 1 or 32.

That is, the business district information provision server and the service application server of FIG. 1 or 32 may be implemented as a part of one service provision server. In this case, the service application provision 401 plays the same role of the service application server illustrated in FIG. 1 or 32. Further, the business district information provision unit 402 also plays the same role as the business district information provision server illustrated in FIG. 1 or 32. However, the DB 403 is a component shared by the service application provision unit 401 and the business district information provision unit 402 and information required for each provision unit or information to be stored may be stored and operated in the DB 403.

More specifically, the database unit (hereinafter, referred to as DB) 403 includes the consumer information, the business information, the real estate information, the location information, and the like.

The consumer information includes the age, sex, report location, usage log information of the service application, and social network information for the consumer who creates the consumer intention.

The business information stores registered business information including the business name, the business item list, the business location, the business contact number, and the like.

The real estate information includes geographical location information including facility information and map information to which the local information is reflected.

The location information may store the location information, more specifically, location and usage of a building, entry business information and building distribution, road information, rice fields, fields, mountains, rivers and streams, or the like and further, store distribution information, information on distribution of public facilities and industrial facilities, and information on population distribution of franchise stores owned by a franchise holding company mapped to the geographical information together.

Further, the DB 403 may further include payment information DB, order information, a report history, business district information big data, and the like.

The payment information stores payment information of a pre-registered consumer, a security program for payment, various programs according to a payment process, etc., based on consumer login information in conjunction with the payment server. The order information DB temporarily stores information on an order request received from the consumer terminal 10. The report information stores log information for the consumer intention information, the consumer's desire opinion, and the consumer intention information. In this case, the log information for the consumer intention information means the number of the consumer intention indications and a consumer intention acceptance history by another consumer with which the business type or business name, the item to be processed, the inconvenience report area coincide. The business district information big data stores business district information big data received from the business district information provision server or stores customized business district information later requested by the founder.

The service application provision unit 401 provides the service application program to the consumer terminal 12. The service application program as a program for real-time connection between the founder/operator of the business and the consumer who shows the intention to the demand serves as a passage for providing an online to offline (O2O) between the consumer and the founder and the existing business operator.

As an example, the consumer terminal 12 selects the business and the processed item through the service application program and transmits the order request to the service application provision unit 401. In addition, the consumer terminal 12 may transfer the consumer intention when the business or the processed item desired by the consumer is not in the pre-registered business/processed item through the service application program.

Upon receiving the order request from the consumer terminal 12, the service application provision unit 401 requests the business terminal 42 of the pre-registered business to produce the item to be processed according to the order request.

The service application provision unit 401 transmits a production request for the item to be processed to the pre-registered business to the business terminal 40 according to the payment result according to the order request. The business that receives the production request products the item to be processed and delivers the item to be processed to the consumer who sends the order request.

When the order request received by the consumer terminal 12 does not exist in the business or the item list to be processed pre-registered in the DB 403, the service application provision unit 401 notifies that the order request does not exist to the business district information provision unit 402.

Further, the service application provision unit 401 may monitor a real-time tracking status, the waiting time, a reservation status, etc., of the order delivery, or the like by receiving business status information from the business terminal 42. The consumer terminal 12 may display a business list to which the monitoring situation is reflected at the time of searching the business.

The business district information provision unit 402 transmits a message for asking whether to apply the consumer intention the consumer terminal 12 and when receiving the consumer's history according to the application from the consumer terminal 12, the business district information provision unit 402 extracts at least one of the consumer information, the business type, the business name or application area, and the consumer's desired opinion and generates the business district information big data and stores the generated business district information big data in the DB 403. In addition, in order to respond to the consulting request of the founder, the customized business district information for the business founding consulting is generated by using the business district information big data. The customized business district information may be an optimal business founding area, an item, or the like according to the consumer intention for a founder who performs new business founding according to an example and may be service improvement items, added or modified processed items according to the consumer intention for the existing business operator according to another example.

More specifically, when there is no business or processed item desired by the consumer among the businesses or the processed items registered in the DB 403, the business district information provision unit 402 may transmit the message for asking whether to apply the consumer intention to the consumer terminal 12. Upon receipt of the consumer intention history according to the application from the consumer terminal 12, the business district information provision unit 402 extracts at least one of the consumer information, the business type, the business name, the application area, and the consumer's desired opinion on the basis thereof to generate the business district information big data.

In addition, in order to respond to the consulting request of the founder, the customized business district information for the business founding consulting is generated by using the business district information big data and stored in the DB 403.

In this case, the consumer intention may be personally created by the consumer, or may have consented to intention expression of another consumer according to another example or any one of the business recommendation lists according to yet another example.

In addition, the consumer intention may be selected from one or more similar menus or similar business types recommended for the consumer in the business district information provision unit 402 based on a keyword searched by the consumer.

In the specification, the 'consumer intention' may be referred to as a business district inconvenience report, a business opening request, a business type opening request, or a consumer's desired opinion and it will be apparent that if the consumer intention is displayed in or reflected to the business district information system, the consumer intention is limited to the term, but may be expressed in various expressions.

The transceiving unit 404 transmits/receives information to/from the consumer terminal 12, the GPS satellite 32, and the consumer terminal 42.

The control unit 405 controls the operations of the respective components such as the service application provision unit 401, the business district information provision unit 402, the DB 403, the transceiving unit 404, etc. According to the business district information provision system of the embodiments of the present invention, realistic market demand can be grasped by generating business district information big data reflecting the actual consumer intention for a target business type or a target business shop unlike just providing an optimal location condition of a business district designed based on only usage pattern information and entering information of consumers and registered business information.

As a result, a founder can receive a consulting service based on business district information big data provided by the business district information provision system of the present invention, thereby previously grasping the actual demand of the desired business type or desired business (brand), so as to increase the success rate of business founding and enjoy a marketing effect for making it easier for the founder to open a business later by utilizing the compensation service.

Although preferred embodiments of the present invention have been described for illustrative purposes, those skilled in the art will appreciate that various modifications, additions and substitutions are possible, without departing from the scope and spirit of the invention as disclosed in the accompanying claims.

### INDUSTRICAL APPLICABILITY

The present invention can provide optimally located business district information designed by combining consumer intention related to business district information collected during the use of application services with existing business district information during the use of an application service.

## Claims

1. A business district information provision system, comprising:
a service application server providing a service application;
a consumer terminal transmitting a consumer intention created by a consumer using the service application; and
a business district information provision server by generating business district information big data by extracting at least one of consumer information, a business type, a business name, an application area, and a consumer's desired opinion on the basis of the consumer intention, and generating customized business district information corresponding to a request of a founder or a business operator on the basis of the business district information big data.

2. The business district information provision system of claim 1,
wherein the consumer intention is a request to open a business or an agreement about a request to open a business created by another consumer.

3. The business district information provision system of claim 1,
wherein the business district information provision server includes:
a storage unit storing at least one of business information, real estate information, consumer information, the consumer intention information, and the business district information big data;
an information analysis unit extracting at least one of the consumer information, the business type, the business name, the application area, and the consumer's desired opinion; and
a business information management unit generating the business district information big data by combining the extracted information with the business information, the real estate information, the consumer information, or the consumer intention information.

4. The business district information provision system of claim 3,
wherein the storage unit includes:
a consumer information storage unit storing the consumer information including an age, sex and application location for the consumer expressing the consumer intention, log information of using the service application, and social network information;
a business information storage unit storing registered business information including the business name, an item list, business location, and a business contact;
a real estate information storage unit storing the real estate information including geographic location information including facility information and map information reflecting the local information; and
a report information storage unit storing the consumer intention, the consumer's desired opinion, and log information about the consumer intention.

5. The business district information provision system of claim 4,
wherein the log information about the consumer intention information stores a business type, a business name, an item list, the number of the consumer intentions matched with the application area, and a consumer intention history by another consumer.

6. The business district information provision system of claim 1,
wherein the business district information provision service further includes a subsidiary service provision unit storing compensation service information for providing the consumer intention to the consumer expressing the consumer intention when the consumer intention matched with the business name, business type, item list, and the application area is received to the preset threshold number of times or more, and transmitting a push notification providing the compensation service information to the consumer terminal.

7. The business district information provision system of claim 1,
wherein the customized business district information is business district information for a founder, including an optimal business area and an item list.

8. The business district information provision system of claim 1,
wherein the customized business district information is business district information for an existing business operator, including service improvements based on the consumer intention, and additional or modified items.

9. The business district information provision system of claim 1,
wherein the customized business district information is information for setting an optimal business area as a result of grouping the consumer intention by sub-unit for each area on the basis of the business district information big data.

10. The business district information provision system of claim 7 or 9,
wherein the optimal business area is an area in which a maximum profit of the founder is calculated by comparing the result of grouping the consumer intention for each area with a minimum distance capable of accommodating consumers of the corresponding business.

11. The business district information provision system of claim 1,
wherein, in the business district information provision server, when a key word input through the service application program is not pre-registered business information but is a franchise business, the consumer intention is analyzed as a business open request created based on the franchise business, which is a franchise store open request.

12. The business district information provision system of claim 1,
wherein, in the business district information provision server, when a key word input through the service application program is not pre-registered business information but is an individual business, the consumer intention is analyzed as a business open request created based on the individual business by reflecting business-related information additionally input by the consumer.

13. The business district information provision system of claim 1,
wherein, in the business district information provision server, when a key word input through the service application program is not pre-registered item information, the consumer intention is analyzed as a business open request created based on the item by reflecting item-related information additionally input by the consumer.

14. The business district information provision system of claim 1,
wherein the business district information provision server receives a recommended business list for analyzing the business open request to search for a business or item requested to open and providing an item the same as or similar to the business or item requested to open.

15. The business district information provision system of claim 14,
wherein, in the business district information provision server, when there is a business selected from the recommended business list provided to the consumer terminal, a business open request is created according to business criteria to be reflected to the business district information big data and to be read on another consumer terminal.

16. The business district information provision system of claim 14,
wherein, in the business district information provision server, when there is no business selected from the recommended business list provided to the consumer terminal, a business open request is created according to item criteria to be reflected to the business district information big data and to be read on another consumer terminal.

17. The business district information provision system of claim 15 or 16,
wherein, in the business district information provision server, when receiving agreement on the business open request read from another consumer terminal, the received agreement is reflected in the business district information big data as the consumer intention created by another consumer.

18. The business district information provision system of claim 1,
wherein the service application server monitors real time tracking status, waiting time, and reservation status, received from the business terminal.

19. The business district information provision system of claim 1,
wherein the service application server receives waiting time and real-time tracking status at the time of an order request, for the item of the business searched from the consumer terminal, from the business terminal, and provides the waiting time and the real-time tracking status to the consumer terminal.

20. A business district information provision method of a business district information provision server interlocking with a consumer terminal and a service application server, the method comprising:
receiving a consumer intention from the consumer terminal;
analyzing information including an age, sex, contact, application area, business type, business name, and item of a consumer from the consumer intention;
reflecting the analyzed information in previously stored business district information big data to update the big data; and
generating a customized business district information with respect to a business type, business or desired area requested by a founder on the basis of the updated business district information big data.

21. The method of claim 20,
wherein the business district information big data includes information about whether or not the same business type or the same business exists in a predetermined range based on the application area, log information about common consumer intention, consumer distribution information, real estate information, and map information.

22. The method of claim 20, further comprising:
storing compensation service information for providing the consumer intention to the consumer expressing the consumer intention, and transmitting a push notification providing the compensation service information to the consumer terminal when the common consumer intention matched with the business name, business type, item list, and the application area is received the preset threshold number of times or more, and thus the business based on the consumer intention opens.

23. The method of claim 20,
wherein the receiving the consumer intention includes:
generating a URL address of a web page for the consumer intention;
providing the URL address to SMS, an email, or a social network service according to sharing request of the consumer; and
reflecting the consumer intention in log information when another consumer agrees about the consumer intention through the URL address provided to the SMS, the email, or the social network service.

24. The method of claim 20,
wherein the receiving the consumer intention includes:
providing a predetermined survey history to the consumer terminal; and
receiving a response result for the survey history from the consumer terminal.

25. The method of claim 20,
wherein the customized business district information is information for setting an optimal business area as a result of grouping the consumer intention by sub-area on the basis of the business district information big data.

26. The method of claim 25,
wherein the optimal business area is an area in which a maximum profit of the founder is calculated by comparing the result of grouping the consumer intention by sub-area with a minimum distance capable of accommodating consumers of the corresponding business.

27. The method of claim 25, further comprising, after receiving the consumer intention:
analyzing the consumer intention as a business open request created based on the franchise business, which is a franchise store open request, when a key word input into the consumer terminal is not pre-registered business information but is a franchise business;
storing a key word in a database server by reflecting business-related information additionally input by the consumer and analyzing the consumer intentionas a business open request created based on an individual business, when the key word input into the consumer terminal is not business information pre-registered in the database server but is the individual business; and
storing a key word in the database server by reflecting business-related information additionally input by the consumer and analyzing the consumer intention as a business open request created based on the item when the key word input into the consumer terminal is not is not pre-registered item information.

28. The method of claim 25,
wherein the generating the business district information big data includes:
analyzing the business open request to search for a business or an item requested to open in the database server and receiving a recommended business list for providing the business requested to open or an item the same as or similar to the item requested to open; and
providing the recommended business list to the consumer terminal.

29. The method of claim 25,
wherein, in the generating the business district information big data,
when there is a business selected from the recommended business list provided to the consumer terminal, a business open request is created according to business criteria to be reflected to the business district information big data and to be read on another consumer terminal, and
when there is no business selected from the recommended business list provided to the consumer terminal, a business open request is created according to item criteria to be reflected to the business district information big data and to be read on another consumer terminal.

30. A method of providing business district information using a consumer terminal connected to a service application server and a business district information provision server, the method comprising:
connecting the consumer terminal to a service application provided by the service application server to request an order for a desired business and a desired item;
receiving a message asking a consumer intention from the service application server when the desired business and the desired item do not exist in the service application; and
transmitting the consumer intention including a desired business name, a desired business type, an application area, a consumer's desired opinion, or an intention to use consumer information to the business district information provision server by replying to the message.

31. The method of claim 30, further comprising:
transmitting a URL generation request for posting the consumer intention on SMS, an email, or a social network service to the business district information provision server; and
posting an address of the URL on the SMS, the email, or the social network service in conjunction with the business district information provision server.

32. The method of claim 30, further comprising:
receiving compensation service push notification for opening a business based on the consumer's intent from the business district information provision server.

33. A service application server, comprising:
a user information database storing individual consumer information using a service application program from a consumer terminal;
an order information database storing an order request received from the consumer terminal;
a payment information database calculating a billing cost corresponding to the order request and transmitting the billing cost to a payment server; and
a business information database transmitting an order history according to the order request in response to the payment result received from the payment server to a business terminal, monitoring a real-time tracking status, waiting time or a reservation status received from the business terminal, and transmitting the real-time tracking status, the waiting time or the reservation status to the consumer terminal.

34. The service application server of claim 33,
wherein the business information database includes:
an order management unit recording an order history corresponding to the order request for each category and updating a real-time order status and waiting time;
a payment unit calculating a billing cost corresponding to the order request and notifying the billing cost to the payment server;
a sales management unit recording an order history, in which the billing cost is paid, among the order history and storing the order history;
an inventory management unit monitoring a status of remaining raw materials by subtracting consumed raw materials according to the order history; and
a purchase management unit recording and storing a history of purchase of the raw materials.

35. The service application server of claim 33,
wherein the business information database further includes an event management unit registering event contents proceeding in the business and providing the event contents to the consumer terminal.

36. A method of operating a service application server, comprising:
receiving an order request from a consumer terminal;
calculating a billing cost corresponding to an order history of the order request and transmitting the billing cost to a payment server when a business item depending on the order request exists;
requesting a consumer intention in conjunction with a business district information provision server when a business item depending on the order request does not exist;
transmitting the order history to a business terminal depending on the payment result received from the payment server; and
monitoring a real-time tracking status, waiting time or a reservation status received from the business terminal, and transmitting the real-time tracking status, the waiting time or the reservation status to the consumer terminal.

37. The method of claim 36, further comprising:
registering the event contents received from the business terminal; and
providing a priority to the consumer terminal of a business in which the even proceeds when providing a business list to the consumer terminal.
